(19) **Europäisches Patentamt / European Patent Office / Office européen des brevets**

(11) **EP 1 919 996 B1**

(12) **EUROPEAN PATENT SPECIFICATION**

(45) Date of publication and mention
of the grant of the patent:
**26.08.2009 Bulletin 2009/35**

(51) Int Cl.:
***C08K 5/00*** (2006.01)

(21) Application number: **06813993.0**

(22) Date of filing: **31.08.2006**

(86) International application number:
**PCT/US2006/033981**

(87) International publication number:
**WO 2007/027859 (08.03.2007 Gazette 2007/10)**

(54) **ANTIMICROBIAL COMPOSITION**

ANTIMIKROBIELLE ZUSAMMENSETZUNG

COMPOSITION ANTIMICROBIENNE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.08.2005 US 216800**

(43) Date of publication of application:
**14.05.2008 Bulletin 2008/20**

(73) Proprietor: **KIMBERLY-CLARK WORLDWIDE, INC.
Neenah, WI 54956 (US)**

(72) Inventors:
• **YAHIAOUI, Ali**
**Roswell, Georgia 30075 (US)**
• **SCHORR, Phillip, A.**
**Atlanta, Georgia 30350 (US)**
• **HOFFMAN, Douglas, R.**
**Greenville, Wisconsin 54942 (US)**
• **KOENIG, David, William**
**Menasha, Wisconsin 54952 (US)**
• **SPENCER, Anthony S.**
**Woodstock, Georgia 30189 (US)**
• **DOBSON, Angela, G.**
**Atlanta, Georgia 30318 (US)**

(74) Representative: **Beacham, Annabel Rose
Frank B. Dehn & Co.
St Bride's House
10 Salisbury Square
London
EC4Y 8JD (GB)**

(56) References cited:
| | |
|---|---|
| EP-A2- 0 136 231 | WO-A-94/15649 |
| WO-A1-01/35743 | US-A- 4 587 266 |
| US-A- 5 141 803 | US-A1- 2003 189 013 |
| US-A1- 2005 054 257 | US-B1- 6 180 548 |

**Description**

FIELD OF INVENTION

The present invention relates to a chemical treatment that may be applied to a protective article. In particular, the invention relates to material compositions for controlling the spread of pathogens and infection diseases.

BACKGROUND

In recent years, the prevalence of nosocomial infections has had serious implications for both patients and healthcare workers. Nosocomial infections are those that originate or occur in a hospital or long-term care, hospital-like settings. In general nosocomial infections are more serious and dangerous than external, community-acquired infections because the pathogens in hospitals are more virulent and resistant to typical antibiotics. Nosocomial infections are responsible for about 20,000-100,000 deaths in the United States per year. About 5% to 10% of American hospital patients (about 2 million per year) develop a clinically significant nosocomial infection. These hospital-acquired infections (HAIs) are usually related to a procedure or treatment used to diagnose or treat the patient's illness or injury.

The mechanism of action of nosocomial infections, as in any other infectious disease, is dependent on host, agent and environment factors. Risk factors for the host are age, nutritional status and co-existing disorders. Nosocomial infections are influenced by the microbes' intrinsic virulence as well as its ability to colonize and survive within institutions. Diagnostic procedures, medical devices, medical and surgical treatment are risk factors in the hospital environment. Hospital-acquired infections can be caused by bacteria, viruses, fungi, or parasites. These microorganisms may already be present in the patient's body or may come from the environment, contaminated hospital equipment, healthcare workers, or other patients. Depending on the causal agents involved, an infection may start in any part of the body. A localized infection is limited to a specific part of the body and has local symptoms.

Hospital-acquired infections also may develop from surgical procedures, catheters placed in the urinary tract or blood vessels, or from material from the nose or mouth that is inhaled into the lungs. The most common types of hospital-acquired infections are urinary tract infections (UTIs), pneumonia due to use of endo-tracheal ventilators, blood-born pathogen contaminations, and surgical wound infections. For example, if a surgical wound in the abdomen becomes infected, the area of the wound becomes red, hot, and painful. A generalized infection is one that enters the bloodstream and causes general systemic symptoms such as fever, chills, low blood pressure, or mental confusion.

Hospitals and other healthcare facilities have developed extensive infection programs to prevent nosocomial infections. Some standard precautionary measures to prevent infections include, hand washing, which remains an effective method of preventing the spread of illness, and should be routinely performed. Frequent hand washing by healthcare workers and visitors is necessary to avoid passing infectious microorganisms to hospitalized patients, via contact transfer mechanism. Gloves should be worn when touching blood, body fluids, secretions, excretions and contaminated items. Gloves should be also used before touching mucus membrane and non-intact skin. Gloves should be changed after tasks and procedures on the same patient that is very contaminated. Gloves should be removed promptly after use, before touching non-contaminated environmental surfaces and before going to another patient. Hands should be washed subsequently. Masks, eye protections and face shields should be worn to protect the mucus membranes of the eye, nose and mouth during procedures and patient care activities that are likely to expose the health care worker through splashes or sprays of blood, body fluids secretions or excretions. Gowns should be worn to protect skin and avoid contamination of clothing during splashes of blood or body fluids. Medical instruments and equipment must be properly sterilized to ensure they are not contaminated.

In today's healthcare environment, the battle against nosocomial infections has not yet been won. Even though hospital infection control programs and a more conscientious effort on the part of healthcare workers to take proper precautions when caring for patients can prevent about 25% to 33 % of these infections, a significant number of infections still occur. The current procedures are not sufficient. Despite enforcement of precautionary measures (e.g. washing hands, wearing gloves, face mask and cover gowns), HAIs still occur predominately via contact transfer. That is, individuals who contact pathogen-contaminated surface such as hands, clothing and/or medical instruments, can still transfer the pathogens from one surface to another immediately or within a short time after initial contact. Researchers have employed numerous ways to attack microbe related issues. Antiseptics and disinfectants are used extensively in hospitals and other health care settings for a variety of topical and hard-surface applications. In particular, they are an essential part of infection control practices and aid in the prevention of nosocomial infections. Conventional antimicrobial agents currently available, however, are not very effective at killing and immobilizing pathogens on to the surfaces to which the antimicrobial agents are applied.

The problem of antimicrobial resistance to biocides has made control of unwanted bacteria and fungi complex. The widespread use of antiseptic and disinfectant products has prompted concerns about the development of microbial resistance, in particular cross-resistance to antibiotics. A wide variety of active chemical agents (or "biocides") are found in these products, many of which have been used for hundreds of years for antisepsis, disinfection, and preservation. Despite this, less is known about the mode of action of these active agents than about antibiotics. In general, biocides have a broader spectrum of activity than antibiotics, and, while antibiotics tend to have specific intracellular targets, biocides may have multiple targets. The widespread use of antiseptic and disinfectant products has prompted some speculation on the development of microbial resistance, in particular cross-resistance to antibiotics. This review considers what is known about the mode of action of, and mechanisms of microbial resistance to, antiseptics and disinfectants and attempts, wherever possible, to relate current knowledge to the clinical environment.

Antibiotics should only be used when necessary. Use of antibiotics creates favorable conditions for infection with the fungal organism *Candida*. Overuse of antibiotics is also responsible for the development of bacteria that are resistant to antibiotics. Furthermore, overuse and leaching of antimicrobial agents or antibiotics can cause bioaccumulation in living organisms and may also be cytotoxic to mammalian cells.

To better protect both patients and healthcare providers, protective articles, such as garments, gloves, and other coverings that have fast-acting, highly efficient, antimicrobial properties, including antiviral properties, are need for a variety of different applications for wide spectrum antimicrobial protection. The industry needs anti-microbial materials that can control or prevent contact transfer of pathogens from area to area and from patient to patient. In view of the resistance problems that may arise with conventional antimicrobial agents that kill when bacteria ingest antibiotics, an antimicrobial that kills virtually on contact and has minimal or no leaching from the substrate upon which it is applied would be well appreciated by workers in the field. Hence, it is important to develop materials that do not provide a medium for the pathogens to even intermittently survive or grow upon, and that are stably associated to the substrate surfaces on which the antimicrobial agent is applied. Moreover, the antimicrobial protective articles should be relatively inexpensive to manufacture. It is also desirable to have an antimicrobial material that simultaneously has adequate to good fluid barrier and anti-static properties. Additionally, it is also desirable to have an antimicrobial and anti-viral material to control infections from blood borne and/or air-born pathogens, such as HIV, SARS, hepatitis B, etc.

## SUMMARY OF THE INVENTION

The present invention describes in-part an antimicrobial material composition that can be applied to material substrates and protective articles. The antimicrobial composition includes a mixture of at least one of component selected from a Group A, Group B, and optionally Group C. Group A includes a first or primary antimicrobial agent, such as polyhexamethylene biguanide (PHMB). Group B includes at least a second antimicrobial agent, and/or an organic acid, or a processing aid. Group C includes an anti-static agent or fluoropolymer. Alternatively, the antimicrobial composition may be characterized as a mixture, in terms of weight percent of active agents either in solution or on a substrate, of about 0.1-99.9 wt.% of PHMB, and about 0.1 - 99.9 wt.% concentration of a synergistic coactive agent, X, wherein X is at least one of the following: a second antimicrobial agent, an organic acid, a surface active agent, or a surfactant. The primary and secondary agents are present in a ratio ranging from about 1000:1 1 to about 1:1000, respectively.

The composition exhibits a microbe-killing efficacy of at least $1 \times 10^3$ cfu/gram (or 3 Log$_{10}$ reduction) within a period of about 30 minutes. Desirably, the composition exhibits at least a 1 Log$_{10}$ reduction within a period of about a period of 5-10 minutes. Also, the composition is stable on the substrate surfaces to which it may be applied, so that it does not tend to leach out from the applied surface, and can achieve a uniform coating of active agents over the surface.

The second antimicrobial agent is at least one of the following: another biguanide, a chlorohexine, an alexidine, and relevant salts thereof, stabilized oxidants such as chlorine dioxide, stabilized peroxide (urea peroxide, mannitol peroxide) (ie:), sulfites (sodium metabisulfite), bis-phenols (triclosan, hexachlorophene, etc), quaternary ammonium compounds (benzalkonium chloride, cetrimide, cetylpyridium chloride, quaternized cellulose and other quaternized polymers, etc), various "naturally occurring" agents (polyphenols from green or black tea extract, citric acid, chitosan, anatase $TiO_2$ tourmaline, bamboo extract, neem oil, etc), hydrotropes (strong emulsifiers) and chaotropic agents (alkyl polyglycosides) and synergistic combinations thereof.

The processing aids may include an alcohol (e.g., octanol, hexanol, isopropanol), wetting agent surfactant, viscosity modifier (e.g., polyvinyl pyrrolidone (PVP), ethyl hydroxy ethyl cellulose) binding agent surface modifier, salts, or pH-modifiers. The surface active agent may include a cellulose or cellulose-derivative material modified with quaternary ammonium groups.

According to another aspect, the present invention also relates to protective articles that have a substrate with at least a first surface having a treatment of the present antimicrobial composition in solution. In certain embodiments, the antimicrobial treated first surface is oriented outwardly away from a user's body. At least a portion of the substrate can be composed either of an elastomeric, polymeric, woven, or nonwoven material. In particular, the substrate can be either a natural or synthetic elastomeric membrane or sheet, cellulose-based fabric, polymer film, or polyolefin material, or combinations thereof. When the substrate is a nonwoven material, the nonwoven material may have a coating of the antimicrobial solution on a single side of the material, or the antimicrobial solution can permeate up to about 15 $\mu$m of the nonwoven material, but it is also possible to fully saturate the material throughout its bulk if desired.

The protective article can take the form of a garment to be worn by patients, healthcare workers, or other persons who may come in contact with potentially infectious agents or microbes, including an article of clothing such as a gown, robe, face mask, head cover, shoe cover, or glove. Alternatively, the protective article may include a surgical drape, surgical fenestration or cover, drape, sheets, bedclothes or linens, padding, gauze dressing, wipe, sponge and other cleaning, disinfecting and sanitizing articles for household, institutional, health care and industrial applications.

The invention also describes a method for treating a substrate, the method comprising: a) providing a substrate and an antimicrobial solution comprising a mixture of an antimicrobial agent containing PHMB and a synergistic coactive agent; b) either immersing the substrate in a liquid bath or spraying a coating of the antimicrobial solution on a surface of the substrate. The method may involve exposing the substrate to a glow-discharge treatment (e.g. corona or plasma) of an excited gas to functionalize a surface of the substrate for receiving the antimicrobial solution.

The substrate may encompasses both woven and nonwoven fabrics made from either natural or synthetic fibers or combination blends of the two, elastic and non-elastic, porous and non-porous membranes or films, and laminates or combinations thereof. Other substrates may include rubber, plastic, or other synthetic polymer materials, or metal, steel, glass or ceramic materials. These substrates can be prepared for use in various health care, personal care, institutional, industrial and other applications where the potential for the spread of infection diseases exist.

Additional features and advantages of the present protective and/or sanitizing articles and associated methods of manufacture will be disclosed in the following detailed description. It is understood that both the foregoing summary and the following detailed description and examples are merely representative of the invention, and are intended to provide an overview for understanding the invention as claimed.

BRIEF DESCRIPTION OF FIGURES

FIG. 1 is an exemplary process for application of a treatment composition of the present invention to one or both sides of a traveling web.

FIG. 2 is alternative arrangement and method of applying a treatment composition of the present invention.

FIGs. 3A-C are schematic representations of a 3- and 4-roll reverse roll coating process.

FIGs. 4A and 4B are schematic representations of typical arrangements of Gravure coaters.

FIG. 5 is a schematic representation of a wire-wound metering rod or bar set up.

DETAILED DESCRIPTION OF THE INVENTION

Section I - Definitions & Technical Terms

In this specification and the appended claims, the singular forms "a," "an," and "the" include plural reference unless the context clearly dictates otherwise. Unless defined otherwise, all technical and scientific terms used herein have the same meaning as commonly understood or generally accepted by one of ordinary skill in the art to which this invention pertains.

As used herein, the terms "antimicrobial agent" or "antimicrobial agents" refer to chemicals or other substances that either kill or slow the growth of microbes. Among the antimicrobial agents in use today are antibacterial agents (which kill bacteria), antiviral agents (which kill viruses), antifungal agents (which kill fungi), and antiparasitic drugs (which kill parasites). The two main classes of antimicrobial agents are "antibiotics" and surface disinfectants, otherwise known as "biocides." Biocides and antibiotics are both antimicrobial agents.

The term "biocides" is a general term describing a chemical agent, such as a pesticide, usually broad spectrum, which inactivates living microorganisms. Because biocides range in antimicrobial activity, other terms may be more specific, including "-static," referring to agents that inhibit growth (e.g., bacteriostatic, fungistatic, or sporistatic) and "-cidal," referring to agents that kill the target organism (e.g., bactericidal, fungicidal, sporicidal, or virucidal).

The term "antibiotics" refer to a synthetic or naturally-derived organic chemical substance, used most often at low concentrations, in the treatment of infectious diseases of man, animals, and plants, which prevents or inhibits the growth of microorganisms. Examples of antibiotics include therapeutic drugs, like penicillin, while biocides are disinfectants or antiseptics like iodine. Antibiotics typically have a single target and a very specific mode of action, thus interacting with either receptors in the cellular membrane, or the metabolic or nucleic functions of the cell, causing inhibition of enzymatic or metabolic processes, similar to a "lock and key" to achieve microbicidal action, whereas biocides have multiple targets and modes of action, which for instance, may include physical disruption and permanent damage to the outer cell membrane of a bacterial microbe. Antibiotics and biocides are as different from one another as trying to open a door with a key versus a sledge hammer. Because of their specific mode of action, antibiotics are more closely associated with the spread and development of new multi-drug resistant microorganisms. As a result, the use of a biocide is the preferred embodiment of the invention. Some example of useful biocide chemistries include biguanides (e.g., : chlorohexine, alexidine, polyhexamethylene biguanide, and relevant salts thereof), halogen-releasing agents (e.g.,: iodine, iodophors, sodium hypochlorite, N-halamine, etc.), stabilized oxidants such as chlorine dioxide, stabilized peroxide (e.g., urea peroxide, mannitol peroxide) metal-containing species and oxides thereof (e.g., : silver, copper, selenium, etc. either in particle form or incorporated into a support matrix such as a zeolite or polymer), sulfides (e.g., sodium metabisulfite), bis-phenols (e.g., triclosan, hexachlorophene, etc), quaternary ammonium compounds (e.g., benzalkonium chloride, cetrimide, cetylpyridium chloride, quaternized cellulose and other quaternized polymers, etc.), various "naturally occurring" agents (e.g., polyphenols from green or black tea extract, citric acid, chitosan, anatase $TiO_2$, tourmaline, bamboo extract, neem oil, etc.), hydrotropes (e.g., strong emulsifiers) and chaotropic agents (e.g., alkyl polyglycosides) and synergistic combinations thereof. Depending on substrate chemistry (polyolefin vs. cellulosic-based materials) and the method of incorporation into the product (topical vs. grafting), many of the above chemistries could be used alone or in concert to achieve the final claimed product properties of interest.

As used herein, the term "containing" refers to the product generated according to any method of incorporating an antimicrobial agent into a desired item. This can include melt addition of the active agent to a polymer melt during extrusion and spinning of fibers and manufacturing of nonwoven materials used in making products; topical application methods that may or may not impart "sidedness" to the fabrics used in constructing the finished products; and other non-standard methods such as plasma treatment, electrostatic attachment, radiation surface graft coplymerizations using for example UV, gamma rays and electron-beam radiation sources, or the use of chemical initiation to produce graft copolymerized surfaces having anti-microbial activity, etc.

As used herein, the phrase "broad spectrum of microorganisms," is defined to include at a minimum Gram positive and Gram negative bacteria, including resistant strains thereof, for example methicillan-resistant *Staphylococcus aureus* (MRSA), vancomycin-resistant *Enterococci* (VRE) and penicillin-resistant *Streptococcus pneumoniae* (PRSP) strains. Preferably, it is defined to include all bacteria (Gram +, Gram - and acid fast strains) and yeasts such as *Candida albicans*. Most preferably, it is defined to include all bacteria (Gram +, Gram -, and acid fast), yeasts, and both envelope and naked viruses such as human influenza, rhinovirus, poliovirus, adenovirus, hepatitis, HIV, herpes simplex, SARS, and avian flu.

As used herein, the phrase "rapidly inhibits and control the growth," is defined to mean that the item in question leads to a reduction in the concentration of a broad spectrum of microorganisms by a magnitude of at least 1 $\log_{10}$ as measured by shaker flask method, liquid droplet challenge test, and/or aerosol challenge test within about 30 minutes. Preferably, it leads to a reduction in microbial concentration by a factor of 3 $\log_{10}$ (i.e., reduction by $10^3$ colony forming units per gram of material (cfu/g)) within about 30 minutes. Most preferably, it leads to a reduction in microbial concentration by a factor of 4 $\log_{10}$ or more within about 30 minutes.

As used herein, the phrase "prevents or minimizes the contact transfer," is defined to mean that the item in question will lead to a 1 $\log_{10}$ reduction in the transfer of a broad spectrum of viable microorganisms when contacting another surface as compared to an untreated control item as measured by the contact transfer protocol outlined in U.S. Patent Application Publication No. 2004/0151919. Preferably, it leads to a reduction in viable microorganisms transfer by a factor of 3 $\log_{10}$. More preferably, it leads to a reduction in viable microorganisms transferred by a factor of $\log_{10}$ 4 or greater.

A "non-leaching" antimicrobial surface is one that passes ASTM E2149-01 testing protocol entitled "Standard Test Method for Determining the Antimicrobial Activity of Immobilized Antimicrobial Agents Under Dynamic Contact Conditions." The lack of a zone of inhibition with the treatment agents chosen demonstrates the active species do not leach from the treated substrate.

Section II - Description

Antiseptics and disinfectants are extensively used in hospital and other health care settings for a variety of topical and hard-surface applications. In particular, they are an essential part of infection control practices and help in the prevention of nosocomial infections. In recent years, mounting concerns over the potential for microbial contamination and infection risks in has increased the use of antimicrobial products that contain chemical biocides. In general, biocides have a broader spectrum of activity than antibiotics, and, while antibiotics tend to have specific intracellular targets, biocides may have multiple targets. Nonetheless, some conventional biocides typically either need to be ingested by the pathogen or be leached from a contact surface to be effective against microbes.

In view of the need for a composition and articles treated with the composition, the present invention provides an approach to address the problems associated with bacterial and viral transmission and infection. According to the present invention, the antimicrobial composition can produce a 1 $\log_{10}$ kill efficacy immediately after contact, and at least about a 3 $\log_{10}$ kill efficacy in about less than about 30 minutes, typically under about 10 or 15 minutes. The composition can be applied stably to a variety of substrates or materials, such as either woven or nonwoven fabrics, and organic or inorganic surfaces.

Section A - Antimicrobial Composition

The compositions according to the present invention adapts a combination of antimicrobial reagents to produce a synergistic effect that is non-additive of the individual components. We considered several compounds as potential antimicrobial agents and/or processing aids. In particular, we considered various cationic polymers, such as quaternary ammonium compounds and polymeric biguanides, alcohols, and surfactants as primary candidates for possible application on protective substrates. We have found that a combination of cationic polymers such as quaternary ammonium compounds (e.g., quaternary ammonium cellulose and quaternary ammonium siloxane), polymeric biguanides, surfactants, alcohols, and organic acids, such as acetic, citric, benzoic acids, can produce a non-additive, synergistic systems with broad pathogen efficacy. The combination with other antimicrobial compounds, surfactants, appear to improve antimicrobial efficacy of polymeric biguanides over treatments with that employ polymer biguanides alone. These synergistic formulations allow for a fast-acting multi-mechanism of action which would make them less prone to develop bacterial resistance than the single component biguanide formulations. Moreover, the active biocide components in the present inventive formulations can be more efficacious at relatively lower concentrations than if individual, single components were used at the same corresponding concentrations. These synergistic formulations allow not only for improved efficacy, but also allow for potentially lower leachability, lower cytotoxicity and lower cost. Hence, with present compositions one can use polymeric biguanides at lower concentrations than conventionally observed.

Poly-hexamethylene biguanide (PHMB) hydrochloride is a cationic biguanide that strongly attracts and disrupts the negatively charged membrane of most microorganisms. PHMB is a polymer with a repeating unit consisting of highly basic biguanide groups linked with hexamethylene spacers. Traditionally, the activity of PHMB increases on a weight basis with increasing levels of polymerization, which has been linked to enhanced inner membrane disruption. PHMB binds to receptive sites on the surface of bacterial cellular membranes and disrupts extensively the bilayer membrane, causing major detrimental interference with bacterial metabolic processes. It is believed that PHMB causes domain formation of the acidic phospholipids of the cytoplasmic membrane. Permeability changes ensue, and there is believed to be an altered function of some membrane-associated enzymes.

According to certain theories, a proposed sequence of events during the interaction of PHMB with a cell envelope is as follows: (i) rapid attraction of PHMB toward the negatively charged bacterial cell surface, with strong and specific adsorption to phosphate-containing compounds; (ii) the integrity of the outer membrane is impaired, and PHMB is attracted to the inner membrane; (iii) binding of PHMB to phospholipids occurs, with an increase in inner membrane permeability ($K^+$ loss) accompanied by bacteriostasis; and (iv) complete loss of membrane function follows, with precipitation of intracellular constituents and a bactericidal effect. The mechanism of PHMB action in bacteria and fungi is the disruption of the outer cellular membranes by means of 1) displacing divalent cations that provide structural integrity and 2) binding to membrane phospholipids. These actions provide disorganization of the membrane and subsequent shutting down of all metabolic processes that rely on the membrane structure such as energy generation, proton motive force, as well as transporters. PHMB is particularly effective against pseudomonas.

There is a substantial amount of microbiological evidence that disruption of the cellular membrane is a lethal event. This can be modeled in the laboratory by producing small unilamellar phospholipid vesicles (50-100nm in diameter) that are loaded with a dye. Addition of PHMB in the physiological concentration range causes rapid disruption of the vesicles (observed by monitoring release of the dye) and the time constant for the reaction corresponds to the rapid rate of kill. Once the outer membrane has been opened up, PHMB molecules can access the cytoplasmic membrane where they bind to negatively charged phospholipids. Physical disruption of the bacteria membrane leads to leakage of critical cellular components from the cell, thus killing the bacteria.

The very strong affinity of PHMB for negatively charged molecules means that it can interact with some common anionic (but not cationic or nonionic) surfactants used in coatings formulations. However, it is compatible with polyvinyl alcohol, cellulosic thickeners and starch-based products and works well in polyvinyl acetate and vinyl acetate-ethylene emulsion systems. It also gives good performance in silicone emulsions and cationic electrocoat systems. Simple compatibility tests quickly show if PHMB is compatible with a given formulation and stable systems can often be developed by fine-tuning anionic components.

The PHMB molecule may bind to the coated substrate surface, such as gloves, cover gowns, facemasks, or medical and surgical instruments, through hydrophobic interactions with apolar substrates and complex charge interaction associating with the regions of the substrate that have negative charge. Once the bacteria comes within close proximity of the PHMB molecule the PHMB is preferentially transferred to the much more highly negatively charged bacterial cell. Alternatively, the hydrophobic regions of the biguanide may interact with the hydrophobic regions of the substrate allowing the cationic regions of the PHMB molecule accessibility to interact with the negatively charged bacteria membrane. The true mechanism is likely a mixture of both types of interactions. Although, the particular mechanism of retention to the substrate is not well understood at present, our most recent leaching data implies it does indeed stick to the substrate and does not leach as defined by ASTM testing methods, described in the empirical section, below. Since it shows no evidence of leaching from the applied substrate, PHMB is less likely to lead to organism resistance or to cytotoxic effects.

Commercially available iterations of PHMB, such as under the trade names Cosmocil CQ (20 wt.% PHMB in water) or Vantocil, a heterodisperse mixture of PHMB with a molecular weight of approximately 3,000, are active against gram-positive and gram-negative bacteria, but may not be sporicidal.

The second active antimicrobial agent may include a quaternary ammonium compound, a quaternary ammonium siloxane, a polyquaternary amine; metal-containing species and oxides thereof, either in particle form or incorporated into a support matrix or polymer; halogens, a halogen-releasing agent or halogen-containing polymer, a bromo-compound, a chlorine dioxide, a thiazole, a thiocynate, an isothiazolin, a cyanobutane, a dithiocarbamate, a thione, a triclosan, an alkylsulfosuccinate, an alkyl-amino-alkyl glycine, a dialkyl-dimethyl-phosphonium salt, a cetrimide, hydrogen peroxide, 1-alkyl-1,5-diazapentane, or cetyl pyridinium chloride.

Table 1 summarizes various biocides and processing aids that may be used in the present antimicrobial compositions. It also lists their common chemical names or commercial names. Quaternary ammonium compounds, such as commercially available under the names of Aegis™ AEM 5700 (Dow Corning, Midland, MI) and Crodacel QM (Croda, Inc., Parsippany, NJ), with certain surfactants such as alkyl-polyglycosides, available commercially under the name Glucopon 220 UP (Cognis Corp, Ambler, PA), and chitosan glycolate, available under the name Hydagen CMF and Hydagen HCMF (Cognis Corp., Cincinnati, OH), can significantly enhance the killing efficacy of PHMB in a synergistic fashion as will be demonstrated in the tables herein. One should note that many of the biocides described herein may be used singly or in combination in a variety of products which vary considerably in activity against microorganisms.

Table 1. Table of Active Reagents and Processing Aids

| Reagent | Concentration Range (wt. %) | Brand or Common Name | Vendor Name |
|---|---|---|---|
| Polyhexamethylene biguanide (PHMB) | 0.01 - 20 | Cosmocil CQ | Arch Chemicals, Inc. Norwalk, CT |
| Chitosan glycolate | 0.01 - 10 | Hydagen CMF and HCMF | Cognis Corp., Ambler, PA |
| Octadecylaminodimethyl Trimethoxysilylpropyl Ammonium Chloride | 0.01 - 10 | AEGIS AEM 5700 | Dow-Corning, Midland, MI |
| N-Alkyl Polyglycoside | 0.01 - 10 | Glucopon 220 UP | Cognis Corp., Ambler, PA |
| PG-Hydroxyethylcellulose Cocodimonium Chloride (Quaternary Ammonium CellulosicSalt) | 0.01 - 10 | Crodacel QM | Croda Inc., Persipanny, NJ |
| Xylitol | 0.01 - 10 | Xylitol | Sigma-Aldrich, Milwaukee, WI |
| 2-hydroxy-1,2,3-propanetricarboxylic acid | 0.01 - 10 | Citric Acid | Hach Company Ames, IA |
| Benzenecarboxylic acid | 0.1 - 2.0 | Benzoic acid | Mallinckrodt Baker, Inc Phillipsburg, NJ |
| 2-hydroxybenzoic acid | 0.01 - 10 | Salicylic acid | Mallinckrodt Baker, Inc Phillipsburg, NJ |
| Methane-carboxylic acid | 0.01 - 2.0 | Acetic acid | Sigma-Aldrich St. Louis, MO |
| 1,3-Propanedicarboxylic Acid | 0.01 - 10 | Glutaric acid | Sigma-Aldrich St. Louis, MO |
| Iodine | 0.05 - 10 | odine | Sigma-Aldrich St. Louis, MO |
| Ethyl Hydroxyethyl cellulose | 0.01 - 5.0 | Bermocoll EBS 481 FQ ("E 481") | Akzo Nobel, Inc., Stamford, CT |
| Polyvinyl pyrrolidone | 0.01 - 10 | Plasdone K90 | ISP Technologies, Inc., Wayne, NJ |

(continued)

| Reagent | Concentration Range (wt. %) | Brand or Common Name | Vendor Name |
|---|---|---|---|
| Poly(vinyl pyrrolidone-co-vinyl acetate) | 0.01 - 10 | PVPNA S-630 | ISP Technologies, Inc., Wayne, NJ |
| Polyvinyl pyrrolidone-Iodine complex | 0.01 - 10 | PVP-Iodine | ISP Technologies, Inc., Wayne, NJ |
| Guanidine Hydrochloride and Sorbitol | 0.01- 5.0 | Nicepole FL | NICCA USA, Inc. Fountain Inn, SC |
| Acrylic Co-Polymer Compound and Isopropyl Alcohol | 0.01 - 5.0 | Nicepole FE 18U | NICCA U.S.A., Inc. Fountain Inn, SC |
| 25% Copper oxide (CuO, $Cu_2O$) (CAS #1317-39-1), 75% polypropylene (PP) resin | 0.01 - 20.0 | Cupron* | Cupron, Inc. Greensboro, NC |
| Silver Sodium Hydrogen Zirconium Phosphate | 0.01 - 20.0 | AlphaSan® RC 2000* | Milliken, Spartanburg, SC |
| Silver Zinc glass (70-100%,) barium sulfate (1-30%), PP resin (10-30%) | 0.01 - 20.0 | Irgaguard B 7520* | Ciba Specialty Chemicals Corp. Tarrytown, NY |

* Used as internal melt additives. These additives are typically compounded in thermoplastic resins (e.g., polypropylene (PP)) to produce a concentrate which is then dry blended with the virgin resin and co-extruded to produce fibers and webs containing such additives. The additive is generally distributed throughout the bulk of the fiber and enough of the additive is present on the surface of the fiber to provide anti-microbial activity. Concentration of the additive present on the surface of the fiber depends on several factors including additive concentration in the melt relative to the main body of resin or type of resin, processing conditions and thermal history, crystallinity of the resin, and relative thermodynamic compatibility of the resin and the additive . It is understood that the additive must be compatible with thermoplastic resin in the melt for proccesability, and yet it is desirable that the additive be less compatible with the resin at ambient conditions so that the additive migrate to a certain extent to the surface of the thermoplastic fiber. Processing aids such as amorphous compounds can be added to the main resin to ease migration of the additive to the fiber surface. It is also understood that other active ingredients such as PHMB can be compounded and co-extruded in various other thermoplastic resins.

Table 2 summarizes a number of illustrative compositional examples according to the present invention that contain various percent combinations of reagents listed in Table 1. Each reagent is presented in terms of weight percent (wt%) of the active agents in the total formulation. Other components such as processing aids (e.g., hexanol, octanol, alkyl-polyglycoside, or other surfactants) to enhance wetting and/or treatment coating uniformity can be incorporated into the formulation in a range from about 0.1 to about 1 wt%, with respect to the total amount of ingredients in the composition. In certain embodiments, the processing aids are present in about 0.2 - 0.75 wt% concentration. The respective formulations are mixed in an aqueous solution. The formulation can be diluted to any desired or required concentration level, depending on the treatment process to achieve the desired or predetermined add on amount on a substrate for antimicrobial efficacy. For instance, when using a saturation process and targeting a 100% wet pickup, one can prepare a solution that will be similar in add on amount to the concentration added to the substrate. In other words, if one targets a one percent add-on to the substrate, the concentration of active agents in the treatment composition solution will also be 1 wt%. The individual components are listed using the common or commercial brand name only as a shorthand form to identify the individual chemical reagents, and should not be construed to limit the invention to any particular commercial embodiment or formulation. The compositional examples of Table 2, all can be used as topical coatings over a predetermined organic or inorganic substrate, and each is effective in producing about at least a 3 $\log_{10}$ reduction in the colony forming units (CFU/mL)(CFU/g) within about 15-30 minutes. Desirably, the compositions are fast acting to kill microbes within about 10 minutes, and in some cases within 5 minutes.

While PHMB is a constituent of all of the compositions in Table 2, Examples 1-6, and 16 illustrate formulations that contain a mixture of at least two or three other helpful active antimicrobial agents or processing aids. Examples 7-13 show formulations that contain PHMB at a significant level (≥ 70-75wt%). Examples 14-26 contain moderate levels of PHMB. In addition to exhibiting some antimicrobial properties, the quaternary ammonium compounds and surfactants aid in wetting treated substrate materials. It is suspected that this may help provide a more uniform treatment surface for PHMB on the substrate when used in combination. It is also thought that an enhanced wettability of the material permits the targeted organism to come into better proximity and contact with the active moieties of the antimicrobial agents on the surface of the material. The alcohol may also induce a similar effect on the antimicrobial properties of the material. A material treated with the solution, combining the various agents, can exhibit a greater organism-kill efficacy than with PHMB alone.

Examples 27-31 in Table 2A combine the fast-acting topical compositions with relatively slower acting biocides that are either embedded on the surface of substrates or melt-incorporated with polymer-based nonwoven fibers. The two kinds of antimicrobial formulations work in a complementary fashion. The fast-acting topical antimicrobial compositions provide an acute, rapid response against (i.e., immobilize and kill) any microbes that may contact an antimicrobial-treated substrate, and the slower acting biocides embedded or incorporated on the substrate maintains the level of protection over an extended period of time of at least an additional 6-12 hours, but more commonly about 24 hours or even longer.

In certain embodiments the antimicrobial composition includes combinations of biocide active agents that work against both bacteria and viruses. For instance, a composition may include: PHMB, quaternary ammonium cellulose, xylitol, citric acid, benzoic acid, surfactant, complexing agent (e.g., PVP), antistatic agent (e.g., Nicepole FL) such as in Examples 1-6. A desirable antistatic agent is one that does not reduce surface tension of water by more than 20 dynes/cm. The present composition desirably is moderately hydrophilic; hence, a droplet of a formulation applied to a surface can produce a contact angle of less than about 90° with respect to, for example, a polypropylene substrate surface. The compositions have a pH in a range of about 2 to about 5 or 6. Preferred pH ranges are about 2.5-4, or 2.5-3.5, depending on the desired, particular environmental conditions for use. Examples 1, 3, 22, and 23, contain an acrylic co-polymer compound and isopropyl alcohol, which serves as an antistatic agent useful for treating nonwoven fabrics such as those commonly found in medical fabrics.

An antimicrobial solution comprising a primary active agent, including at least 0.1-99.9 wt% polyhexamethylene biguanide (PHMB) by weight of active agents, and a secondary active agent selected from at least one of the following: alkyl polyglycosides, quaternized cellulose derivatives, quaternized siloxanes, surfactants, and organic acids. The final concentration for each of the active reagent and processing aids on a treated substrate can range from about 0.01-20 wt%. The exact concentrations may depend on the specific kind of microorganism that one is targeting against and/or the nature of the coated substrate material. As an illustration, the general concentration ranges for each component individually in the examples are summarized in Table 22.

Table 22 - Final Concentration of Composition Components on a Treated substrate.

| Reagent | Target Concentration (wt%) |
|---|---|
| Polyhexamethylene biguanide (PHMB) | 0.01 - 5 |
| Chitosan glycolate | 0.01- 4 |
| Octadecylaminodimethyl Trimethoxysilylpropyl Ammonium Chloride | 0.01 - 4 |
| Alkyl Polyglycoside | 0.01 - 1 |
| PG-Hydroxyethylcellulose Cocodimonium Chloride (Quaternary Ammonium Cellulosic Salt) | 0.01 - 1.5 |
| Xylitol | 0.01 - 1.5 |
| 2-hydroxy-1,2,3-propanetricarboxylic acid | 3 - 8.5 |
| Benzenecarboxylic acid | 0.3 - 0.7 |
| 2-hydroxybenzoic acid | 0.5 - 3.5 |
| Ethanoic acid | 0.5 - 3.5 |
| 1,3-Propanedicarboxylic Acid | 0.5 - 3.5 |
| Iodine | 1 - 2 |
| Ethyl Hydroxyethyl cellulose | 0.05 - 0.5 |
| Polyvinyl pyrrolidone | 0.05 - 1.5 |

(continued)

| Reagent | Target Concentration (wt%) |
|---|---|
| Poly(vinyl pyrrolidone-co-vinyl acetate) | 0.05 - 1.5 |
| Polyvinyl pyrrolidone-Iodine complex | 0.05 - 1.5 |
| Guanidine Hydrochloride and Sorbitol | 0.03 - 1.5 |
| Acrylic Co-Polymer Compound and Isopropyl Alcohol | 0.03 - 1.5 |
| 25% Copper oxide (CAS #1317-39-1) 75% PP resin | 0.1 - 5.0 |
| Silver Sodium Hydrogen Zirconium Phosphate | 0.1 - 5.0 |
| Silver Zinc glass (70-100%,) barium sulfate (1-30%), PP resin (10-30%) | 0.1 - 5.0 0.1 - 5.0 |

The antimicrobial composition should be odorless to humans; that is, the composition is undetectable at least to the human olfactory system. This characteristic is important if the antimicrobial composition is to be used on face masks and other substrates that come into close proximity to the human nose.

Section B - Substrates & Their Properties

A variety of different kinds of substrates can be treated or coated with the present antimicrobial composition. According to certain embodiments, the substrate materials may include, for example, elastomeric membranes, films or foams, such as natural rubber or synthetic polymer latex, soft and hard rubber or plastics, or metal, glass or ceramic surfaces, such as found with medical devices and/or surgical equipment and instruments, or hospital physical plant. Alternatively, other embodiments may have substrate materials that are selected from either woven or nonwoven fabrics. Woven fabrics may be made from natural fibers (e.g., cellulose, cotton, flax linen, wool, silk) or a blend of natural and synthetic fibers (e.g., thermoplastics, polyolefin, polyester, nylon, aramide, polyacrylic materials). A wide variety of elastic or non-elastic thermoplastic polymers may be used to construct nonwoven substrate materials. For example, without limitation, polyamides, polyesters, polypropylene, polyethylene, copolymers of ethylene and propylene, polylactic acid and polyglycolic acid polymers and copolymers thereof, polybutylene, styrenic co-block polymers, metallocene-catalyzed polyolefins, preferably with a density of less than 0.9 gram/cm$^3$, and other kinds of polyolefins, for the production of various types of elastic or non-elastic fibers, filaments, films or sheets, or combinations and laminates thereof.

The beneficial attributes of the present invention are illustrated with nonwoven materials treated with the antimicrobial compositions described in Section A, above. Treated nonwoven fabrics can be made into a variety of products, which may include, for example, protective garments, gowns or aprons, and industrial wear, as well as sheet materials that can be used in the manufacture of bedding fabrics, fenestration covers, wraps, or pads. Other uses may be for various medical-use articles, such as face masks, hand gloves, or foot covers, as well as personal care products, including swim wear, diapers, training pants, absorbent articles, wipes, and adult incontinence articles. The present antimicrobial compositions can be placed in a number of strategic locations to prevent bacterial activity. For example, in medical absorbent or personal care products, the compositions can be placed on either an outer or inner layer away from skin contacting surface, such as either a lining or matrix for an absorbent medium.

Another beneficial aspect of an article of the present invention is that nonwoven or woven substrates and articles subject to the present treatment can have durable antimicrobial characteristics. As Table 3 shows, the present compositions doe not produce zones of inhibition on the treated substrates. The antimicrobial coating formed on the surface of a substrate is non-leaching in the presence of aqueous or aqueous-based substances and organic solvents under typical hospital or healthcare use conditions. Because the antimicrobial agents are strongly adsorbed or bound to the surface of the glove, the antimicrobial effect seems to be chemically more durable, hence providing an antimicrobial benefit for a longer duration.

Further, the non-fugitive nature of the antimicrobial coating can minimize microbial transmission and the development of resistant strains of so-called "super-bugs." Traditional agents leach from the surface of the article, such as a glove, and must be consumed by the microbe to be effective. When such traditional agents are used, the microbe is poisoned and destroyed only if the dosing is lethal. If the dosing is sublethal, the microbe may adapt and become resistant to the agent. As a result, hospitals are reluctant to introduce such agents into areas with immune-compromised patients. Furthermore, because these antimicrobial agents are consumed in the process, the efficacy of the antimicrobial treatment decreases with use. The antimicrobial compounds or polymers used with the present invention are not consumed by the microbes. Rather, the antimicrobial agents rupture the membrane of microbes that are present on the antimicrobial treated substrate surface. A problem with some conventional immobilizing antimicrobial formulations is that, the microbes immobilized still remain alive and continue to produce cytotoxins or other pathogenic agents. The present compositions immobilize and kill the organisms, thereby preventing further potential contamination.

Unlike as conventionally observed, nonwoven materials treated with the present antimicrobial compositions largely maintain their liquid barrier properties when segregated to the surface of the materials. It is believed that by means of controlling the topical placement of the antimicrobial composition, in which PHMB is confined to the outermost or top spunbond layer of a SMS substrate, for instance, one can prevent the creation of a liquid conduit into the underlayers of the substrate material, thereby achieving the beneficial combination of barrier and antimicrobial properties. For example, in certain embodiments, one can manipulate the rheology of the antimicrobial composition during the treatment application process so that the composition does not permeate the inner layers of the treated substrate material. Further, it is desirable to use a formulation that exhibits a relatively high surface tension, greater than about 40 or 50 dynes per cm. Water-soluble polymers that are either not surface active or minimally surface active, such as ethyl hydroxyethyl cellulose or polyvinyl pyrrolidone, can be incorporated in the composition to minimize aqueous penetration into the substrate and preserve an acceptable level of substrate barrier properties. These kinds of water-soluble polymer compounds are good film-forming and viscosity-increasing agents. A combination of film-forming, low surface tension, and higher compositional viscosity characteristics helps to create a uniform functional layer that limits the permeation of the antimicrobial composition treatment into the bulk body of the SMS nonwoven structure, resulting in minimal detrimental impact on barrier properties of the SMS as measured by hydrostatic head pressure. Some examples of this concept can be found in Table 4, which shows that the impact of the antimicrobial treatment on barrier properties of SMS is minimal. The treated substrate attains a measure of barrier protection performance of ≥ 55 millibars hydrostatic head pressure, which is defined as Level 3 barrier protection according to the standards of the Association for the Advancement of Medical Instrumentation (AAMI). A 1.5 ounce per square yard (osy)(~50 gm/m$^2$) SMS fabric with no treatment was used as a control and possessed an average hydrostatic head of 83.5 millibars. A similar SMS fabric treated by conventional padding method with an iteration of the present antimicrobial composition containing only PHMB and a wetting agent, octanol, was shown to possess a hydrostatic head pressure of about 62 millibars, or a drop of roughly 26% as compared to the control. Desirably the hydrostatic head pressure is about 64-68 or 69 millibars. By incorporating a viscosity modifying agent and applying the composition via Meyer rod, however, the hydrostatic head is observed to improve to about 66-67 millibars, or a drop of about only 20% as compared to the control. Hence, with the present invention, one can make a fabric that maintains good barrier properties as well as good antimicrobial properties by using the proper composition and application technique. In addition, placing the antimicrobial chemistry on the surface of the substrate will make the biocides more readily available to interact with pathogens, thus improving overall efficacy. Despite the use of film-forming chemistries in the composition, the coated SMS substrate also maintains its good air permeability characteristics to ensure the thermal comfort of the user.

Another attribute of the present invention is that the coated nonwoven material substrate imparts antistatic properties when an antistatic agent, such as an acrylic copolymer and isopropyl alcohol or guanidine hydrochloride and sorbitol, is added to the composition. Table 5 summaries the resultant barrier and anti-static properties of a 1 osy SMS substrate treated with 0.6 wt% PHMB and co-active anti-static and film-forming agents according to a version of the present composition. The treated substrate attains a measure of barrier protection performance of at least AAMI Level 2 barrier standard, which is accepted as ≥ 20 millibars hydrostatic head pressure. To the extent that Examples C and D in the Table exhibit very rapid static decay (< 0.5 second) and good barrier properties (~42-47 millibars, which is ~15-23% drop compared to control), these examples are preferred.

Embodiments of the present antimicrobial composition may include a protective article, such as gloves, face masks, surgical or medical gowns, drapes, shoe covers, or fenestration covers. For purpose of illustration, the beneficial properties of the present invention can be embodied in a facemask containing a combination of one or more antimicrobial agents and co-active agents that rapidly inhibit and control the growth of a broad spectrum of microorganisms on the surface of the product both in the presence and absence of soil loading. The antimicrobial coating, which rapidly kills or inhibits, can be selectively placed on the exterior nonwoven facing of the mask rather than throughout the entire product. The antimicrobial agents are non-leaching from the surface of the mask in the presence of fluids, and/or are not recoverable on particles that may be shed by the mask in use and potentially inhaled by the user as measured using a blow-through test protocol.

Blow-through testing and analytical work produced evidence that the present antimicrobial combined solution treatment is safe for use with face masks and will not come off of the mask lining under normal use conditions. Using spunbond material samples treated with the present antimicrobial solution, we performed blow-through testing to simulate respiration for use in face mask products over an 8 hour period. The mask materials, including the treated spunbond samples, where compressed and held fixed between two funnels. Humidified air is blown through the funnel apparatus and any chemical treatment that may delaminate from the material is collected in a flask.

In certain embodiment, the antimicrobial agents include a variety of biocides (as opposed to antibiotics), in particular, for instance, polymeric biguanides, such as poly(hexamethylene biguanide) sold under various brand names, such as Cosmocil CQ, Vantocil, etc. Alternatively, the facemask can contain an antimicrobial agent or agents that prevent or minimize the contact transfer of a broad spectrum of viable microorganisms from the surface of the mask to other surfaces that come in contact with the mask both in the presence and absence of soil loading. The facemask can be adapted to have bacterial filtration efficiency (BFE) of greater than or equal to about 85-90% as measured according to ASTM F2101. Preferably, the mask exhibits a BFE of greater than or equal to about 95%. More preferably, the mask possesses a BFE of greater than or equal to about 99%. The facemask can exhibit a differential pressure less than or equal to 5 mm water/cm$^2$ as measured by ASTM F2101 to ensure the respiratory comfort of the product. Desirably, the differential pressure is less than or equal to 2.5 mm water/cm$^2$. The facemask can have a particle filtration efficiency (PFE) of greater than or equal to about 85-90% as measured by Latex Particle Challenge testing (ASTM F2299). Preferably, the PFE is greater than or equal to 95%. More preferably, the PFE is greater than or equal to 99%. The facemask can have a fluid penetration resistance of greater than or equal to about 80 mm Hg against synthetic blood as measured according to ASTM F1862. Preferably, the mask exhibits a fluid penetration resistance of greater than or equal to about 120 mm Hg. More preferably, the mask exhibits a fluid penetration resistance of greater than or equal to about 160 mm Hg.

In another iteration, the advantages of the present invention can be embodied in an antimicrobial cover gown. The gown contains a combination of antimicrobial agents and co-active agents that rapidly inhibit and control the growth of a broad spectrum of microorganisms on the surface of the product both in the presence and absence of soil loading. The gown can contain, prevent or minimize the contact transfer of a broad spectrum of viable microorganisms from the surface of the gown to other surfaces that come in contact with the gown both in the presence and absence of soil loading. As with the facemask, the antimicrobial agents covering the gown surface are also stably associated with the substrate and non-leaching from the surface of the gown in the presence of fluids. The gown can possess a fluid barrier characteristic, as measured by hydrostatic head testing, of equal to or greater than about 20 millibars (AAMI level 2). Preferably, the fluid barrier is measured to be equal or greater than about 50 millibars (AAMI level 3). More preferably, the gown fabric is also resistant to blood and viral penetration, as defined by test standards ASTM F1670 and ASTM F1671. The fluid barrier can be equal to or greater than about 100 millibars.

The antimicrobial-treated gowns can dissipate 50% of a 5000V electrostatic charge in less than 0.5 seconds as measured by static decay testing using the Association of the Nonwovens Fabrics Industries (INDA) Standard Test Method 40.2 (95). Generally described, a 3.5 inch by 6.5 inch specimen is conditioned, including removal of any existing charge. The specimen is then placed in electrostatic decay testing equipment and charged to 5000 volts. Once the specimen has accepted the charge, the charging voltage is removed and the electrodes grounded. The time it takes for the sample to lose a pre-set amount of the charge (e.g. 50% or 90%) is recorded. The electrostatic decay times for the samples referenced herein were tested using calibrated static decay meter Model No. SDM 406C and 406D available from Electro-Tech Systems, Inc., of Glenside, PA. Preferably, the gown material can dissipate 90% of a 5000V charge in less than 0.5 seconds. More preferably, the gown will dissipate 99% of a 5000V charge in less than 0.5 seconds. In addition, the gown material has a Class I flammability rating as measured by flame propagation protocol (CPSC 1610 and NFPA 702). Both the static decay and flame propagation requirements are critical in a hospital setting to minimize the potential likelihood of a fire due to accidental static discharge. It is important to note that not all choices of substrate and antimicrobial composition will lead to this advantageous set of properties and codes that pass both of these criteria in addition to possessing antimicrobial properties are preferred embodiments.

Section C - Process Methods for Achieving Desired Properties

The antimicrobial compositions can be applied topically to the external surfaces of nonwoven web filaments after they are formed. Desirably, a uniform coating is applied over the substrate surfaces. A uniform coating refers to a layer of antimicrobial agents that does not aggregate only at selected sites on a substrate surface, but has a relatively homogeneous or even distribution over the treated substrate surface. Desirably, the processing aid should evaporate or flash off once the antimicrobial composition dries on the substrate surface. Suitable processing aids may include alcohols, such as hexanol or octanol. Note that the terms "surface treatment," "surface modification," and "topical treatment" refer to an application of the present antimicrobial formulations to a substrate and are used interchangeably, unless otherwise indicated.

Nonwoven fabrics that are treated with an antimicrobial coating of the present invention can be fabricated according to a number of processes. In an illustrative example, a method for preparing an anti-microbial treated substrate involves providing a hydrophobic polymer substrate and exposing at least a portion of the substrate to a mixture that includes at least one anti-microbial active agent (e.g. PHMB) and at least one co-active agent (e.g. AEGIS AM 5700) and at least one processing aid (e.g. alky-polyglycoside, or other surfactants). A suggested combination includes contacting the substrate with a mixture that includes an anti-microbial agent, a wetting agent, a surfactant, and a rheology control agent. These components of the treatment composition may be combined in water mixture and applied as an aqueous treatment. The treatment composition may further include other components, such as anti-stats, skin care ingredients, anti-oxidants, vitamins, botanical extracts, scents, odor control agents, and color. The final amount of active reagents on the treated substrate may be diluted to a desired or predetermined concentration.

According to an embodiment, the antimicrobial composition can be applied to the material substrate via conventional saturation processes such as a so-called "dip and squeeze" or "padding" technique. The "dip and squeeze" or "padding" process can coat both sides of and/or through the bulk of the substrate with the antimicrobial composition. When dipped in a bath, the antimicrobial solution be a unitary medium containing all components, or in subsequent multiple step processing, other desired components may be later added to the base antimicrobial layer. For instance, a formulation of an unitary antimicrobial solution may include leveling and/or antistatic agents. On substrates containing polypropylene, an antistatic agent can help dissipate static charge build-up from mechanical friction. An antistatic agent can be added to the antimicrobial solution, and the mixture can be introduced simultaneously to the material substrate in one application step. Alternatively, the antistatic solution can be applied using a spray after the antimicrobial solution in a second step.

In certain product forms, where one wishes to treat only a single side and not the inner layers or opposing side of the sheet substrate, in which the substrate material is layered to another sheet ply (e.g., filter or barrier media) that is without the antimicrobial treatment, other processes are preferred such as at rotary screen, reverse roll, Meyer-rod (or wire wound rod), Gravure, slot die, gap-coating, or other similar techniques, familiar to persons in the nonwoven textile industry. (See, for example, detailed descriptions of these and other techniques are available from Faustel Inc., Germantown, WI (www.faustel.com).) Also one may consider printing techniques such as flexographic or digital techniques. Alternatively one may use a combination of more than one coating to achieve a controlled placement of the treatment composition. Such combination may include, but not limited to, a reverse Gravure process followed by a Meyer rod process. Alternatively, the antimicrobial composition may be applied through an aerosol spray on the substrate surface. The spray apparatus can be employed to apply the antimicrobial solution and/or antistatic agent only on one side of the substrate sheet or on both sides separately if desired. An antistatic agent can be applied to the substrate in a secondary step, for example, using a spray system or any other conventional application process. On sheet materials, the treated nonwoven substrates can achieve at least a hydrostatic head greater than 20 millibars. Antimicrobial coatings are applied in as at least a single layer over SMS fabrics. Alternatively, one can use a melt extrusion process to incorporate an antimicrobial agent into the material followed by topical application of a second anti-microbial agent or co-active from an aqueous solution. Furthermore, other ingredients can also be added during the melt extrusion to enhance for example: a) wettability of the material if desired, b) electrical conductivity or anti-static properties, c) skin emollient, d) anti-oxidants, etc.

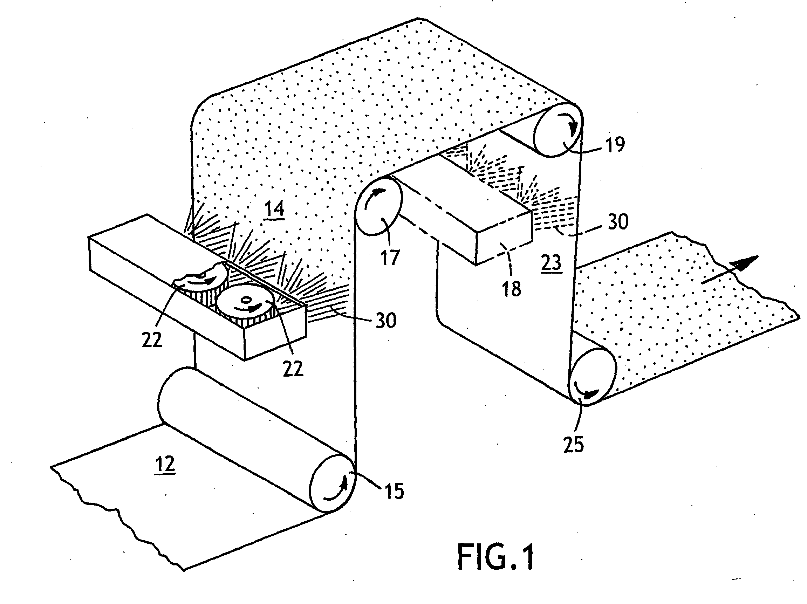

Referring to Figure 1, an exemplary process for application of a treatment composition of the present invention to one or both sides of a traveling web will be described. It should be appreciated by those skilled in the art that the invention is equally applicable to inline treatment or a separate, offline treatment step. Web **12,** for example a spunbond or meltblown nonwoven or a spunbond-meltblown-spunbond (SMS) laminate, is directed under support roll **15** to a treating station including rotary spray heads **22** for application to one side **14** of web **12.** An optional treating station **18** (shown in phantom) which may include rotary spray heads (not shown) can also be used to apply the same treatment composition or another treatment composition to opposite side **23** of web **12** directed over support rolls **17** and **19.** Each treatment station receives a supply of treating liquid **30** from a reservoir (not shown). The treated web may then be dried if needed by passing over dryer cans (not shown) or other drying means and then under support roll **25** to be wound as a roll or converted to the use for which it is intended. For a polypropylene web, drying can be achieved by heating the treated web to a temperature from about 220° F to 300° F, more desirably to a temperature from 270° F to 290° F, by passage over heated drum to set the treatment composition and complete drying. Drying temperatures for other polymers will be apparent to those skilled in the art. Alternative drying means include ovens, through air dryers, infrared dryers, microwave dryers, air blowers, and so forth.

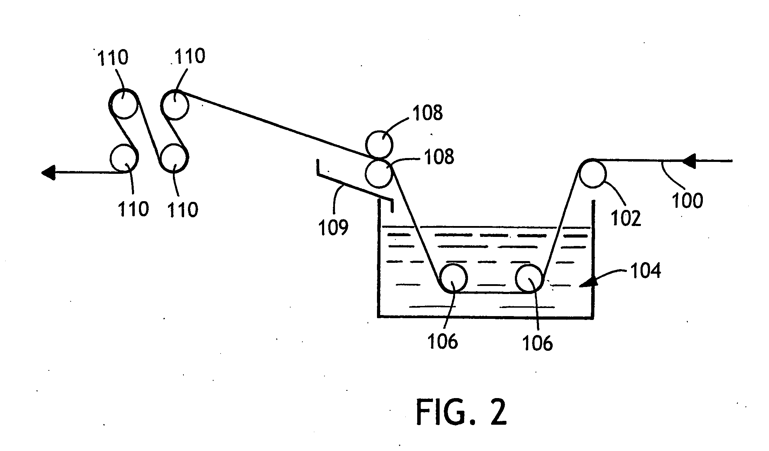

Figure 2 illustrates an alternative arrangement and method of applying a treatment composition of the present invention. The alternative arrangement and method uses a saturation or dip and squeeze application step. As shown in Figure 2, web 100 which for example may be a 2.50 osy bonded carded web of nonwoven surge material passes over guide roll **102** and into bath **104** that contains a mixture of the treating anti-microbial composition in water. The treatment time can be controlled by guide rolls **106.** The nip between squeeze rolls **108** removes excess treating composition which is returned to the bath by catch pan **109.** Drying cans **110** remove remaining moisture. If more than one treatment composition is employed, the dip and squeeze may be repeated and the web 100 can be forwarded to and immersed in additional baths (not shown).

Various other methods may be employed for contacting a substrate with the treatment composition or compositions in accordance with the invention. For example, a substrate may be printed on by means of print rolls or other coating steps, or spray techniques may be employed. Preferably, the treatment composition or compositions are applied as an overlayer onto the substrate by a Meyer rod, reverse Gravure or flexographic techniques, for example, in such a way that the treatment composition forms a uniform and homogeneous layer on top of the substrate with minimum penetration of the treating composition into the bulk of the substrate. The overlayer coating, in general, results in more uniform distribution of the anti-microbial treatment on the substrate and permits the anti-microbial agent(s) to be more readily available on the surface of the substrate. The overlayer coating technique also results in maintaining better barrier properties of the substrate.

As Table 5 shows, restricting the antimicrobial and anti-static agents to certain layers of the substrate (e.g., spunbond layer in SMS structure) contributes to maintaining the barrier and improving the antistatic properties of the substrate. The hydrostatic head are improved and antistatic decay achieved with the use of viscosity modifiers with minimal surface activity. The use of processes that apply a surface overlayer coating that minimally penetrates the bulk of the substrate also promote improved barrier properties as compared to a saturation process for example.

A nonwoven web or laminate can treated with compositions and methods of the present invention to impart broad spectrum anti-microbial and antistatic properties at desired or predetermined locations on the substrate, while maintaining desired barrier properties. Furthermore, the components of the treatment composition can be applied in separate steps or in one combined step. It should also be understood that the method and anti-microbial surface treatment of nonwoven materials with topical application of ingredients of this invention may incorporate not only multiple ingredients for improved anti-microbial performance but may also be used to incorporate anti-static agents which may afford dissipation of static charge build up.

The choice of the coating process is dependent on a number of factors, which include, but are not limited to: 1) viscosity, 2) solution concentration or solids content, 3) the actual coating add-on on the substrate, 4) the surface profile of the substrate to be coated, etc. Often, the coating solution will require some formulation modifications of concentration (or solids content), viscosity, wettability or drying characteristics to optimize treatment or coating performance.

The present invention is further illustrated by the following examples which are representative of the invention.

Example 1. Topical treatment of a substrate using a saturation process.

For illustration purposes, typically, a 500 ml aqueous formulation is prepared containing 0.5 wt% PHMB + 3 wt% citric acid + 0.3 wt% Glucopon 220 UP + 96.8 wt% water, as shown in Table 3. The relative concentrations of examples in Table 3 are normalized to 100% solids for each ingredient. For example, a 0.5 wt.% PHMB in example 1, indicates that 2.5g of Cosmocil CQ (which is 20% solids PHMB) was actually used in 100g solution to achieve an actual 0.5 wt% PHMB in the final composition.

The aqueous formulation is thoroughly mixed for about 20 minutes using a lab stirrer (Stirrer RZR 50 from Caframo Ltd., Wiarton, Ontario, Canada). Alternatively a high shear mixer can also be used. After the aqueous composition (or bath) has been mixed and homogenized, it is poured into a Teflon coated or glass pan. Then, typically an 8" x 11" hand sheet substrate is immersed into the bath for saturation. Generally, full substrate saturation is achieved when the substrate turns translucent. After full saturation, the substrate is nipped between two rollers, with one stationary roller and one rotating roller, of a laboratory wringer No. LW-849, Type LW-1 made by Atlas Electrical Device Co., Chicago, Illinois. After the sample is nipped and passed through the rollers, excess saturant is removed and the wet weight ($W_w$) is measured immediately using a Mettler PE 360 balance. The saturated and nipped sample is then placed in on oven for drying at about 80 C for about 30 minutes or until a constant weight is reached. After drying, the weight of the treated and dried sample ($W_d$) is measured. The amount of treatment that is on the substrate can be measured gravimetrically by first calculating the percent wet pick-up (% WPU) using equation 1,

$$\% \ WPU = (W_w - W_d)/ W_d) \ x \ 100 \qquad \text{(Equation 1)}$$

where,

$W_w$ = Wet weight of saturated sample after nipping
$W_d$ = Dried weight of the treated sample
Then, the percent add-on on the sheet is calculated using equation 2 below.

$$\% \ \text{Add-on} = \% \ WPU \ x \ \text{bath concentration (wt\%)} \qquad \text{(Equation 2)}$$

For example, if the total bath concentration is 3.8 wt% and the calculated %WPU is 100% then the add-on on the substrate is 3.8 wt%. Now it is possible to control add-on on the substrate by controlling the % WPU and the bath concentration. At a given bath concentration the % WPU can be varied to a certain extent by varying the nip pressure of the laboratory wringer. Generally the higher the nip pressure, the more saturant (or treating composition) is squeezed out of the substrate the lower is the % WPU and the lower is the final add-on on the substrate.

Example 2. Topical treatment of a substrate using overlayer coating processes

a. Reverse Roll Coating:

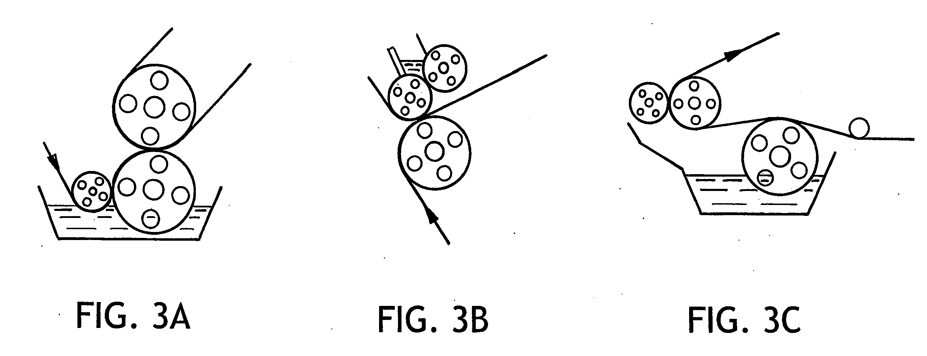

In reverse roll coating, the coating composition is measured onto the applicator roller by precision setting of the gap between the upper metering roller and the application roller below it. The coating is brushed off the application roller by the substrate as it passes around the support roller at the bottom. The diagrams in Figures 3A-C illustrate a 3-roll reverse roll coating process, although 4-roll versions are common. In reverse Gravure coating, the actual coating material is metered by the engraving on a roller before being wiped off as in a conventional reverse roll coating process.

b. Gravure Coating

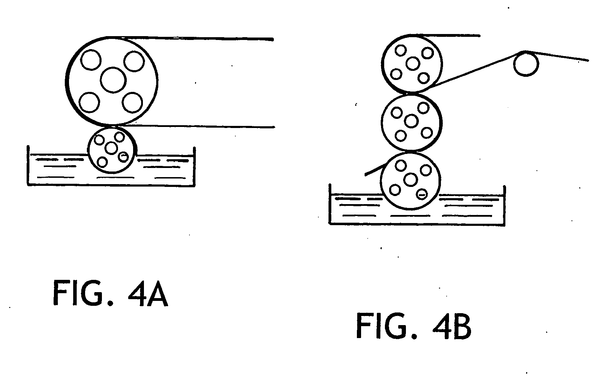

The gravure coating depends on an engraved roller running in a coating bath that fills the imprinted dots or lines of the roller with the coating material. The excess coating on the roller is removed by the doctor blade and the coating is then deposited onto the substrate as it passes through the engraved roller and a pressure roller. Figures 4A and 4B illustrate a schematic representation of typical arrangements of Gravure coaters. Offset gravure is common, where the coating is primarily deposited on an intermediate roller before transfer to the substrate.

c. Meyer Rod (Metering Rod) Coating

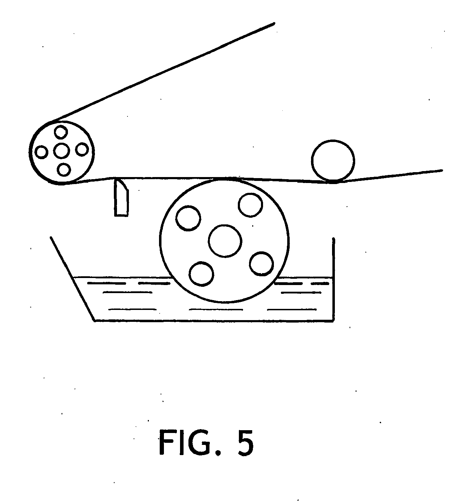

In meter road coating, the wire-wound metering rod sometimes known as a Meyer Bar, allows the desired quantity of the coating to remain on the substrate. The excess coating is deposited onto the substrate as it passes over the bath roller. The quantity is determined by the diameter of the wire used on the rod. This process is remarkably tolerant of non-precision engineering of the other components of the coating machine. Figure 5 shows a schematic representation of a typical set up.

In another embodiment, the topical antimicrobial compositions can be applied cooperatively with slow acting or releasing biocide agents that are either incorporated during melt extrusion as part of the polymer melt formulation of certain nonwoven filaments or fibers, or generating fibers with biocides embedded on the surface of each fiber. As mentioned above, Examples 27-31 in Table 2 are formulations that bring together cooperatively fast acting topical antimicrobial compositions with slower acting internal melt co-extruded and embedded biocide formulations. Adjustment of the concentration of incorporated biocides can control the distribution and overall prevalence of the biocide agents on the fiber surface.

Section III - Antimicrobial Test Methods

A. Sample Preparation

The test organisms are grown in 25mL appropriate broth medium for about $24 \pm 2$ hours at $37 \pm 2°C$ in a wrist action shaker. The bacterial culture is then transferred by placing about $100\mu L$ aliquot in 25mL of broth and grown again for about $24 \pm 2$ hours at $37 \pm 2°C$. The organisms are then centrifuged and washed three times with phosphate buffered saline (PBS). The organisms are then suspended in PBS to obtain an inoculum of approximately $1 \times 10^8$ CFU/mL.

The test articles and control swatches are exposed to an ultraviolet light source for about 5-10 minutes per side before testing to assure that the swatches are sanitized prior to inoculation with the bacteria. The test materials are brought into contact with a known population of test bacteria from the inoculum for a specified period of time. A sample is then plated at the end of the exposure time to enumerate the surviving bacteria. The $\log_{10}$ reduction form the control material and the original population is calculated using the following formula:

$$\text{Log}_{10} \text{ Control}^* - \text{Log}_{10} \text{ CFU/swatch Test Article} = \text{Log}_{10} \text{ Reduction}$$

\* CFU/swatch from control swatches or theoretical CFU/swatch.

After exposing the bacteria to the surface of our treated product for a designated amount of time (~10-30 minutes), the substrate is placed in a flask and a buffer solution is added to elute the microorganisms off the substrate prior to plating them to see how many are left alive. This buffer solution contains a chemical to de-activate or "neutralize" the antimicrobial agent to (a) stop the active agent from killing the organisms after the designated time period and (b) to prevent artifacts that may arise from exposing the microorganisms to the antimicrobial in solution rather than solely on the substrate. Because each chemical used as an antimicrobial agent is a little different (ie: cationic, nonionic, metal, etc), a different neutralizer was likely added in each case to shut off the antimicrobial at the desired end point of the experiment. These neutralizers are pre-screened to make sure that they do not affect the microorganisms. The neutralizer employed may be selected from a list that is commonly used in the field. These include, non-ionic degtergents, Bisulphate, lecithin, leethen broth, thiosulfate, thioglycolate, and pH buffers, Method similar to those described in American Society for Testing and Materials, Standard Practices for Evaluating Inactivators of Antimicrobial Agents Used in Disinfectant, Sanitizer,Antiseptic, or Preserved Products, Amer. Soc. Testing Mat. E 1054-91 (1991) can be used.

B. Dynamic Shaker Flask Protocol

This test was used to quickly screen different antimicrobial combinations to look for synergistic effects. The experimental procedure is based on ASTM E 2149-01. In brief, the test is performed by first adding a 2" x 2" sample of treated material to a flask containing 50 mL of a buffered-saline solution. The flask is then inoculated with the challenge organism (6.5-7 $\log_{10}$ total) and shaken through mechanical means for a designated period of time. At specified time points, a sample of the solution is then removed and plated. Lastly, the plate is incubated, examined for microbial growth, and the number of colony forming units counted. The log reduction in organisms is measured by comparing the growth on the experimental plate to control plates with no antimicrobial treatment.

C. Zone of Inhibition Protocol to Measure Leaching

The ASTM dynamic shake flask test calls for the ASTM E 2149-01 and the AATCC 147-1998 zone of inhibition protocols to be used to analyze the leachability of the test material. To assess whether the applied antimicrobial coating on the materials truly are stable and do not leach from the substrate surface, two tests are employed. First, according to the American Association of Textile Chemists and Colorists (AATCC)-147 test protocol, in a dry-leaching test, the antimicrobial treated material is placed in an agar plate seeded with a known amount of organism population on the plate surface. The plate is then incubated for about 18-24 hours at about 35°C or 37°C $\pm$ 2°C. Afterwards, the agar plate is assessed. Any leaching of the antimicrobial from the treated material would result in a zone of inhibited microbial growth. As data in the examples that follow summarizes, we found no zones of inhibition, indicating that no antimicrobial agent leached from any of the samples tested.

Second, in a wet-leaching zone of inhibition test, according to the American Society for Testing and Materials (ASTM) E 2149-01 test protocol involving a dynamic shake flask, we placed several pieces of an antimicrobial-coated substrate in a 0.3mM solution of phosphate ($KH_2PO_4$) at buffer pH ~6.8. The piece of material was allowed to sit for 24 hours in solution and then the supernatant of the solution was extracted. The extraction conditions involved where about 30 minutes at room temp (~23°C) with 50 ml of buffer in a 250 ml Erlenmeyer flask. The flask is shaken in a wrist shaker for 1 hour $\pm$ 5 minutes. About 100 micro liters ($\mu$L) of supernatant is added to a 8 mm well cut into a seeded agar plate and allow to dry. After about 24 hours at 35°C $\pm$ 2°C, the agar plate is examined for any indicia of inhibition of microbial activity or growth. The absence of any zones of inhibition suggests no leaching of the antimicrobial from the surface of the glove into the supernatant, or its effect on the microorganism on the agar plate.

In summary, these protocols are performed by incubating an inoculated plate containing either the actual treated material or a solution that has been exposed to the treated material. This plate is then analyzed for zones of inhibition of organism growth to detect if the antimicrobial has leached off of the material or into the solution.

D. Quick Kill Protocol

In another aspect, to assess the efficacy of how rapidly the applied antimicrobial agents kill, we employed a direct contact, rapid germicidal test, developed by Kimberly-Clark Corporation. This test better simulates real world working situations in which microbes are transferred from one substrate to another through direct contacts of short duration. This test also permits us to assess whether contact with the surface of the treated material at one position will quickly kill microbes, whereas the solution-based testing of the ASTM E 2149-01 protocol tends to provide multiple opportunities to contact and kill the microbes, which is less realistic in practice.

Briefly, microorganisms (6.5-7 $\log_{10}$ total) suspended in a buffered-saline solution are placed onto a substrate with or without an antimicrobial coating. The microbial suspension (250 $\mu$l for bacteria; 200 $\mu$l for viruses) is spread over a 32 cm$^2$ area for 1 minute using a Teflon® spreading device. Following spreading, the substrate is allowed to sit for a specified contact time. Following the contact time, the substrate is placed into an appropriate neutralizer and shaken and vortexed thoroughly. Samples are taken from the neutralizer and plated on appropriate media to obtain the number of viable microbes recovered. The number of microbes recovered from an untreated substrate is compared to the number recovered from a treated substrate to determine the effectiveness of the antimicrobial coating. Data in tables 6-10 indicates the reduction in viable microbes recovered from treated spunbond or SMS material compared to untreated spunbond or SMS material.

D.1 Quick Kill Protocol for Masks and Gowns

A stock culture used in challenging both coated and uncoated materials is prepared according to the following. Organisms evaluated include, *Staphylococcus aureus* (MRSA) ATCC 33591, *Staphylococcus aureus* ATCC 27660, *Enterococcus faecalis* (VRE) ATCC 51299, and/or *Klebsiella pneumoniae* ATCC 4352. The appropriate organism from freezer stock and culture in 25 ml of TSB media in a loosely capped 50 ml conical tube, shaken at 200 rpm 24 $\pm$ 6 hr at 35 $\pm$ 2°C. After the 24 hours of incubation 100 $\mu$l culture is used to inoculate a second 25 ml of TSB media in a 50 ml conical tube. This is incubate shaken at 200 rpm, 24 $\pm$6 hr, at 35 $\pm$ 2°C. After another 24 hours, the suspension is centrifuge at 9000 rpm (4 $\pm$ 2°C) for 10 minutes. The resulting supernatant is replaced with 25 ml sterile PBS and vortexed for 1 minute to resuspend cells. The resulting cell suspension is diluted with PBS to achieve a target inoculum concentration of approximately $10^7$ CFU/ml. This final working inoculum solution may or may not contain a 5% soil load (bovine serum albumin).

The material swatches are challenged with 250 $\mu$l of the inoculum added to the middle of the material attached to the Test Material Challenge Device (50 ml conical tube). The inoculum challenge is spread onto the material for 1 minute using a sterile Teflon® policeman. After which the suspension is allowed to sit for the additional time necessary to reach the desired contact time of 10 or 30 min. Upon completion of the contact time, the material is aseptically transferred to individual sample containers containing 25 ml LEB extractant and vortexed thoroughly. The sample is extracted by placing the containers on an orbital shaker (200 rpm) for 10 minutes. After which the number of microbes are measured by viable plate count.

E. Contact Transfer Protocol

Microorganisms (6.5-7 $\log_{10}$ total) suspended in a buffered-saline solution are placed onto a substrate with or without an antimicrobial coating. The microbial suspension (250 $\mu$l for bacteria; 200 $\mu$l for viruses) is spread over a 32 $cm^2$ area for 1 minute using a Teflon® spreading device. Following spreading, the substrate is allowed to sit for a specified contact time. Following the contact time, the substrate is inverted and placed on porcine skin for 1 minute. While on the skin, a continuous weight of $\sim$75 g is applied evenly to the substrate onto the skin. Following 1 minute on the skin, the substrate is removed, placed in an appropriate neutralizer, and shaken and vortexed thoroughly. Samples are taken from the neutralizer and plated on appropriate media to obtain the number of viable microbes recovered. The number of microbes recovered from an untreated substrate is compared to the number recovered from a treated substrate to determine the effectiveness of the antimicrobial coating. To examine the difference in microbes transferred to the porcine from an untreated versus a treated substrate, two 2 ml aliquots of a buffered-extractant solution were placed on the skin where contact was made with the substrate. The skin surface was scraped using a Teflon® spreading device with each 2 ml aliquot being collected following scraping. The extractant collected from the skin was then analyzed for the number of viable microbes in the same manner as the substrate. Effective reduction in contact transfer was determined by comparing the number of microbes extracted from skin contacted with an untreated substrate versus the number extracted from skin contacted with a treated substrate. Tables 11A and 11B present reduction in contact transfer for spunbond and SMS substrates. Data in these tables indicate that treated spunbond material was able to reduce the transfer of bacteria to porcine skin by more than 4 Log (>99.99%) compared to untreated spunbond. Similar results were seen with treated SMS material with a greater than 5 Log reduction in transfer being observed (>99.999%). This tests displays the efficacy of the treated material in reducing the spread of microbes via physical contact.

F. Blow-Through Test Protocol

Employing a proprietary Kimberly-Clark test method, we are able to analyze the acceptability of nonwoven substrates for face mask applications. In the blow-through test, a 125 ml impinger (ACE Glass Inc.) containing approximately 60 ml of deionized water is connected to an air supply using tubing (e.g., Nalgene tubing). The outlet of the impinger is connected to a second and third impinger in parallel, each of which contain approximately 40 ml of deionized water, in order to humidify the air. The outlets of the second and third impinger are joined and routed to a flow regulator. The sample to be tested is cut into a 10 cm diameter and placed between two funnels; a front and back funnel having a top internal diameter of 102 mm. A first impinger containing about 60 ml of deionized water (e.g., Milli-Q water) is connected to an air barb in a hood with Nalgene tubing (5/16"). An output line (1/4") from the first impinger is fitted with a tee to connect a second and third impinger in parallel, both containing about 40 ml of deionized water. A second tee joins the output lines from the two impingers to an inlet of a flow regulator. The outlet from the flow regulator (5/16") is connected to a stem of the funnel with the sample, and tubing from a back funnel is directed to a 500 ml volumetric receiving flask containing about 120 ml of deionized water.

Air is supplied to the first impinger and adjusted to 30 SLPM with the inline flow regulator. An air valve is opened in the hood and air flow is adjusted to 30 SLPM Humidified air is blown through the sample material for about 8 hours at a constant flow rate. After about 8 hours, the air value is closed and the tubing removed from the back funnel. The line is ten pulled up above the water in the receiver flask and washed internally and externally into the receiving flask with small amounts of deionized or purified water (e.g., Milli-Q water). The water extracted is poured into three 60 ml I-CHEM vials and placed in the vacuum evaporation system (Labconco RapidVap® Model 7900002 at 100% speed, 85 °C, 90 min., 180 mbar vac) until dry. The extract is reconstituted in about 1.0 ml deionized water, filtered and injected on high-pressure liquid chromatograph (HPLC). The HPLC system was an Agilent 1100 Quaternary HPLC with a Syn-Chropak Catsec 100A (4.6 x 250 mm) column, 0.1 % trifluoroacetic acid/acetonitrile (95/5) eluent, 0.5 ml/min flow rate, 25 microliter injection, Sedex Upgraded 55 detector, 43 °C, N2 at 3.4 bar and elution with Cosmocil at 5.7 min. and with Crodacel at 6.3 min. The antimicrobial agents are detected and quantified using liquid chromatography.

G. Electro-Static Decay Test

The following describes the static or electrostatic decay test method employed in the present invention use. This method has also been reported in U.S. Patent No. 6,562,777, col. 10, lines 1-16, incorporated herein. This test determines the electrostatic properties of material by measuring the time required dissipating a charge from the surface of the material. Except, as specifically noted, this test is performed in accord with INDA Standard Test Methods: IST 40.2 (95). Generally described, a 3.5 inch by 6.5 inch specimen is conditioned, including removal of any existing charge. The specimen is then placed in electrostatic decay testing equipment and charged to 5000 volts. Once the specimen has accepted the charge, the charging voltage is removed and the electrodes grounded. The time it takes for the sample to lose a pre-set amount of the charge (e.g. 50% or 90%) is recorded. The electrostatic decay times for the samples referenced herein were tested using calibrated static decay meter Model No. SDM 406C and 406D available from Electro-Tech Systems, Inc., of Glenside, PA.

Section IV - Empirical Examples

A.

The following tables present illustrative examples of the synergistic, beneficial effect of the present invention in comparison to some common antimicrobials currently available.

Tables 12-15, provide a baseline reference of the relative efficacy of individual antimicrobial compounds alone at a 1.0% concentration, when applied topically to samples of different nonwoven fabrics (i.e., spunbond, spunbon-meltblown-spunbond (SMS), meltblown), against a broad spectrum of microorganism (gram positive and gram negative bacteria, and fungi: mold and yeast) after a contact time of 1, 5, or 15 minutes for each kind of substrate. The baseline data shows that a composition containing 1 wt.% PHMB can provide a $\geq 3$ $\log_{10}$ reduction in colony forming units (CFU) within 15 minutes.

Table 12 - Dynamic Shake Flask $\log_{10}$ Reduction Results Against S. aureus (ATCC 6538)

|  | Spunbond | | | SMS | | | Meltblown | | |
|---|---|---|---|---|---|---|---|---|---|
| Contact Time (min.) | 1 | 5 | 15 | 1 | 5 | 15 | 1 | 5 | 15 |
| 1.0% PHMB | 4 | 4 | 4 | 4 | 4 | 4 | 4 | 4 | 4 |
| 1.0% Octadecylaminodimethyl Trimethoxysilylpropyl Ammonium Chloride | 0.41 | 3.74 | 4 | 0.7 | 4 | 4 | 1.93 | 4 | 4 |
| 1.0% PG-Hydroxyethylcellulose Cocodimonium Chloride | 0.33 | 0.63 | 1.74 | 1.38 | 2.97 | 4 | 0.09 | 0.2 | 0.44 |
| 1.0% Chitosan | 0 | 0.64 | 2.05 | 0.03 | 0.57 | 1.03 | 0.26 | 0.21 | 0.25 |
| 1.0% Alkyl Polyglycoside | 0 | 0 | 0 | 0 | 0 | 0 | 2.97 | 4 | 4 |
| Control substrates | - | 0 | 0 | - | 0 | 0 | - | 0 | 0.03 |

Table 13 - Dynamic Shake Flask Log$_{10}$ Reduction Results Against P. Aeruginosa (ATCC 9027)

| | Spunbond | | | SMS | | | Meltblown | | |
|---|---|---|---|---|---|---|---|---|---|
| Contact Time (min.) | 1 | 5 | 15 | 1 | 5 | 15 | 1 | 5 | 15 |
| 1.0% PHMB | 4 | 4 | 4 | 4 | 4 | 4 | 4 | 4 | 4 |
| 1.0% Octadecylaminodimethyl Trimethoxysilylpropyl Ammonium Chloride | 3.34 | 4 | 4 | 2.64 | 4 | 4 | 4 | 4 | 4 |
| 1.0% PG-Hydroxyethylcellulose Cocodimonium Chloride | 4 | 4 | 4 | 4 | 4 | 4 | 0.34 | 0.35 | 0.42 |
| 1.0% Chitosan | 0.47 | 2.16 | 4 | 0.81 | 4 | 4 | 0.5 | 0.62 | 0.61 |
| 1.0% Alkyl Polyglycoside | 0.61 | 0.41 | 0.41 | 0.37 | 0.37 | 0.36 | 2.38 | 4 | 4 |
| Control substrates | - | 0.07 | 0.11 | - | 0.12 | 0.11 | - | 0.07 | 0.03 |

Table 14 - Dynamic Shake Flask Log$_{10}$ Reduction Results against A. Niger (ATCC 16404)

| | Spunbond | | |
|---|---|---|---|
| Contact time (min.) | 1 | 5 | 15 |
| 1.0% PHMB | 4.00 | 4.00 | 4.00 |
| 1.0% Octadecylaminodimethyl Trimethoxysilylpropyl Ammonium Chloride | 0.01 | 0.15 | 0.02 |
| 1.0% PG-Hydroxyethylcellulose Cocodimonium Chloride | 0.00 | 0.01 | 0.07 |
| 1.0% Chitosan | 0.11 | 0.27 | 0.31 |
| 1.0% Alkyl Polyglycoside | 0.64 | 0.53 | 0.50 |
| Control substrate | - | 0.00 | 0.00 |

Table 15 - Dynamic Shake Flask Log$_{10}$ Reduction Results Against C. Albicans (ATCC 10231)

| | SMS | | |
|---|---|---|---|
| Contact time (min) | 1 | 5 | 15 |
| 1.0% PHMB | 1.28 | 2.38 | 3.48 |
| 1.0% Octadecylaminodimethyl Trimethoxysilylpropyl Ammonium Chloride | 0.2 | 0.49 | 1.28 |
| 1.0% PG-Hydroxyethylcellulose Cocodimonium Chloride | 1.25 | 2.12 | 2.56 |
| 1.0% Chitosan CMF | 0.04 | 0.13 | 1 |
| 1.0% Alkyl Polyglycoside | 0.59 | 0.08 | 0.19 |
| Control substrate | - | 0 | 0.09 |

We have discovered that the combination of other agents permits the use of less PHMB, which imparts a competitive cost savings, while still achieving the same or better level of antimicrobial activity as before. Tables 10-14, below, show the synergistic effect of present inventive compositions against gram positive and negative bacteria on a nonwoven fabric. The data in Tables 16-20 attest to the fast kill kinetics of the present compositions, at lower PHMB levels in presence of selected co-active agents (Table 1) when compared against PHMB acting alone. The antimicrobial action can achieve significant microbe reduction within a few minutes.

Table 16 - Dynamic Shake Flask $Log_{10}$ Reduction Results against S. Aureus (ATCC 6538)

| Contact time (min) | 1 | 5 | 15 |
|---|---|---|---|
| 0.5% PHMB | 2.31 | 4.00 | 4.00 |
| 1.0% PHMB) | 4.00 | 4.00 | 4.00 |
| 0.50% PHMB, 0.10% PG-Hydroxyethylcellulose Cocodimonium Chloride | 4.00 | 4.00 | 4.00 |
| 0.50% PHMB, 0.10% Octadecylaminodimethyl Trimethoxysilylpropyl Ammonium Chloride | 4.00 | 4.00 | 4.00 |
| Control Spunbond substrate | - | 0.03 | 0 |

Table 17 - Dynamic Shake Flask $Log_{10}$ Reduction Results against S. Aureus (ATCC 6538)

| Contact time (min) | 1 | 5 | 15 |
|---|---|---|---|
| 0.10% PHMB | 0.18 | 0.33 | 0.58 |
| 0.10% PHMB, PG-Hydroxyethylcellulose Cocodimonium Chloride | 2.75 | 4.00 | 4.00 |
| 0.10% PHMB, PG-Hydroxyethylcellulose Cocodimonium Chloride | 1.15 | 4.00 | 4.00 |
| 0.10% PHMB, 3.0% Xylitol | 1.25 | 3.40 | 4.00 |
| 0.10% PHMB, 0.05% Alkyl Polyglycoside | 0.89 | 3.30 | 4.00 |
| 0.10%, PHMB, 0.10% Alkyl Polyglycoside | 3.70 | 4.00 | 4.00 |
| Control Spunbond substrate | - | 0.00 | 0.07 |

Table 18 - Dynamic Shake Flask $Log_{10}$ Reduction Results against P. Aeruginosa (ATCC 9027)

| Contact time (min) | 1 | 5 | 15 |
|---|---|---|---|
| 0.10% PHMB | 0.07 | 0.12 | 0.34 |
| 0.10% PHMB, 0.01% PG-Hydroxyethylcellulose Cocodimonium Chloride | 0.74 | 4.00 | 4.00 |
| 0.10% PHMB, 0.05% PG-Hydroxyethylcellulose Cocodimonium Chloride | 4.00 | 4.00 | 4.00 |
| 0.10% PHMB, 0.10% PG-Hydroxyethylcellulose Cocodimonium Chloride | 4.00 | 4.00 | 4.00 |
| 0.10% PHMB, 1.5% Xylitol | 4.00 | 4.00 | 4.00 |
| 0.10% PHMB, 3.0% Xylitol | 4.00 | 4.00 | 4.00 |
| 0.10% PHMB, 0.01% Alkyl Polyglycoside | 4.00 | 4.00 | 4.00 |
| 0.10%, PHMB, 0.10% Alkyl Polyglycoside | 4.00 | 4.00 | 4.00 |
| Control Spunbond substrate | N/A | 0.00 | 0.04 |

Table 19 - Dynamic Shake Flask $Log_{10}$ Reduction Results against S. Aureus (ATCC 6538)

| Contact time (min) | 1 | 5 | 15 |
|---|---|---|---|
| 0.10% PHMB | 0.18 | 0.33 | 0.58 |

(continued)

| Contact time (min) | 1 | 5 | 15 |
|---|---|---|---|
| 0.10% PHMB, 0.05% PG-Hydroxyethylcellulose Cocodimonium Chloride | 2.75 | 4 | 4 |
| 0.10% PHMB, 0.10% PG-Hydroxyethylcellulose Cocodimonium Chloride | 1.15 | 4 | 4 |
| 0.10% PHMB, 3.0% Xylitol | 1.25 | 3.4 | 4 |
| 0.10% PHMB, 0.05% Alkyl Polyglycoside | 0.89 | 3.3 | 4 |
| 0.10%, PHMB, 0.10% Alkyl Polyglycoside | 3.7 | 4 | 4 |
| Control SMS substrate | - | 0 | 0.07 |

Table 20 - Dynamic Shake Flask $Log_{10}$ Reduction Results against P. Aeruginosa (ATCC 9027)

| Contact time (min) | 1 | 5 | 15 |
|---|---|---|---|
| 0.10% PHMB | 0.07 | 0.12 | 0.34 |
| 0.10% PHMB, 0.01% PG-Hydroxyethylcellulose Cocodimonium Chloride | 0.74 | 4 | 4 |
| 0.10% PHMB, 0.05% PG-Hydroxyethylcellulose Cocodimonium Chloride | 4 | 4 | 4 |
| 0.10% PHMB, 0.10% PG-Hydroxyethylcellulose Cocodimonium Chloride | 4 | 4 | 4 |
| 0.10% PHMB, 1.5% Xylitol | 4 | 4 | 4 |
| 0.10% PHMB, 3.0% Xylitol | 4 | 4 | 4 |
| 0.10% PHMB, 0.01% Alkyl Polyglycoside | 4 | 4 | 4 |
| 0.10%, PHMB, 0.10% Alkyl Polyglycoside | 4 | 4 | 4 |
| Control SMS substrate | - | 0 | .04 |

The particular compositions in the Tables are examples of the present invention to illustrate their non-additive effect, and are not necessarily limiting of the invention.

Furthermore, inclusion of organic acids and alcohols has a significant beneficial impact against viruses. As shown in Table 21, the anti-viral and anti-microbial efficacy of PHMB is enhanced when combined with organic acids, such as citric, benzoic, propionic, salicylic, glutaric, maleic, ascorbic, or acetic acids, and other co-actives. The data show anti-viral/anti-microbial reduction on the order of ≥3 $log_{10}$ CFU against common pathogens.

Table 21 - Dynamic Shake Flask $Log_{10}$ Reduction Results for (0.5% PHMB, 7.5% Citric Acid, 2% N-Alkyl Polyglycoside) against gram positive and gram negative bacteria.

| Formulation: 0.5% PHMB, 7.5% Citric Acid, 2% N-Alkyl Polyglycoside | % Log Reduction | | | |
|---|---|---|---|---|
| Contact Time: | 1 min. | 5 min. | 15 min. | 30 min. |
| S. Aureus (ATCC 6538 - Gram +) | 1.0 | 2.0 | 3.0 | 4.0 |
| P. aeruginosa (ATCC 9027 Gram -) | 4.0 | - | - | - |

B.

According to another embodiment, gloves made from either woven or nonwoven textiles, leather, or elastomeric materials (e.g., natural rubber latex or synthetic polymers) can be either sprayed with a heated solution or immersed in a heated bath containing an antifoaming agent, and an iteration of the present antimicrobial compositions. The solution is heated by the spray atomizer or in a heated canister before entering the atomizer while tumbling in a forced air-dryer. This method allows only the outside of the glove to be treated more efficiently with less solution and still provide the antimicrobial efficacy desired, better adhesion of the antimicrobial to mitigate any leaching of the agent off the surface, and also eliminates the potential for skin irritation for the wearer due to constant contact between the biocide and the user's skin.

To further elaborate the zone of inhibition test and contact-transfer test protocols, a desired inoculum may then be placed aseptically onto a first surface. Any quantity of the desired inoculum may be used, and in some embodiments, a quantity of about 1 ml is applied to the first surface. Furthermore, the inoculum may be applied to the first surface over any desired area. In some instances, the inoculum may be applied over an area of about 7 inches (178 mm) by 7 inches (178 mm). The first surface may be made of any material capable of being sterilized. In some embodiments, the first surface may be made of stainless steel, glass, porcelain, a ceramic, synthetic or natural skin, such as pig skin, or the like.

The inoculum may then be permitted to remain on the first surface for a relatively short amount of time, for example, about 2 or 3 minutes before the article to be evaluated, i.e., the transfer substrate, is brought into contact with the first surface. The transfer substrate may be any type of article. Particular applicability may be, in some instances, for examination or surgical gloves. The transfer substrate, for example, the glove, should be handled aseptically. Where the transfer substrate is a glove, a glove may be placed on the left and right hands of the experimenter. One glove may then be brought into contact with the inoculated first surface, ensuring that the contact is firm and direct to minimize error. The test glove may then be immediately removed using the other hand and placed into a flask containing a desired amount of sterile buffered water (prepared above) to extract the transferred microbes. In some instances, the glove may be placed into a flask containing about 100 ml of sterile buffered water and tested within a specified amount of time. Alternatively, the glove may be placed into a flask containing a suitable amount of Letheen Agar Base (available from Alpha Biosciences, Inc. of Baltimore, Md.) to neutralize the antimicrobial treatment for later evaluation. The flask containing the glove may then be placed on a reciprocating shaker and agitated at a rate of from about 190 cycles/min. to about 200 cycles/min. The flask may be shaken for any desired time, and in some instances is shaken for about 2 minutes.

The glove may then be removed from the flask, and the solution diluted as desired. A desired amount of the solution may then be placed on at least one agar sample plate. In some instances, about 0.1 ml of the solution may be placed on each sample plate. The solution on the sample plates may then be incubated for a desired amount of time to permit the microbes to propagate. In some instances, the solution may incubate for at least about 48 hours. The incubation may take place at any optimal temperature to permit microbe growth, and in some instances may take place at from about 33°C. to about 37°C. In some instances, the incubation may take place at about 35°C.

After incubation is complete, the microbes present are counted and the results are reported as CFU/ml. The percent recovery may then be calculated by dividing the extracted microbes in CFU/ml by the number present in the inoculum in (CFU/ml), and multiplying the value by 100.

In another aspect, to assess the efficacy of how rapidly the applied antimicrobial agents kill, we employed a direct contact, rapid germicidal test, developed by Kimberly-Clark Corporation. This test better simulates real world working situations in which microbes are transferred from a substrate to glove through direct contacts of short duration. Also this test permits us to assess whether contact with the surface of the glove at one position will quickly kill microbes, whereas the solution-based testing of the ASTM E 2149-01 protocol tends to provide multiple opportunities to contact and kill the microbes, which less realistic in practice.

We applied an inoculum of a known amount of microbes to the antimicrobial-treated surface of a glove. After about 3-6 minutes, we assessed the number of microbes that remained on the surface of the treated glove. Any sample with a logarithmic ($log_{10}$) reduction of about 0.8 or greater is effective and exhibits a satisfactory performance level. As with contact transfer tests performed according to current ASTM protocols, a reduction in the concentration of microbes on the order magnitude of about $log_{10}$ 1, is efficacious. Desirably, the level of microbial concentration can be reduced to a magnitude of about 3 $log_{10}$, or more desirably about 4 $log_{10}$ or greater. Table 2 reports the relative efficacy of killing after contact with the coated glove. The concentration of organisms on the surface is given at an initial Zero Time point and at 3, 5, and 30 minute points. As one can see, the resulting percentage reduction in the number of organisms at time zero and after 3, 5, and 30 minutes are dramatic. Significantly, within the first few minutes the contact with the antimicrobial kills virtually all (96-99% or greater) of the microorganisms present.

To test the antimicrobial efficacy of a polyhexamethylene biguanide, we treated nitrile examination gloves according to ASTM protocol 04-123409-106 "Rapid Germicidal Time Kill." In brief, about 50 $\mu$L of an overnight culture of *Staphylococcus aureus* (ATCC #27660, $5 \times 10^8$ CFU/mL) was applied to the glove material. After a total contact time of about 6 minutes the glove fabric was placed into a neutralizing buffer. Surviving organisms were extracted and diluted in Letheen broth. Aliquots were spread plated on Tryptic Soy Agar plates. Plates were incubated for 48 hours at 35°C. Following incubation the surviving organisms were counted and the colony forming units (CFU) were recorded. The reduction ($\log_{10}$) in surviving organisms from test material versus control fabric was calculated:

$\log_{10}$ CFU/swatch Control - $\log_{10}$ CFU/swatch Test Article = $\log_{10}$ Reduction.

We found that on the microtextured nitrile glove samples evaluated, treatment with polyhexamethylene biguanide produced a greater than four log reduction of *Staphylococcus aureus* ATCC 27660 when machine applied at 0.03 g/glove. The results are summarized in Table 23, as follows.

TABLE 23

| HT# | KC# | Antimicrobial Treatment* | Log Recovery | Result † |
|-----|-----|--------------------------|--------------|----------|
| 167 | 45 | Microgrip Nitrile control (RSR nitrile) 89-8 | 3.72 | control |
| 168 | 46 | PHMB[a] Hot Spray (0.03 g/glove) with Q2-5211+ 89-5 | 5.88 | 1.32 |
| 169 | 48 | PHMB[a] Hot Spray (0.03 g/glove) 89-7 | <2.38 | >4.7 |
| 161 | 39 | PFE control (testing reported 9/15/2004) 87-1 | 7.23 | control |

The treatment of nitrile gloves with polyhexamethylene biguanide demonstrates a greater than one log reduction of organisms when hand sprayed with no heat and a greater than 5 log reduction when machine sprayed under heated conditions. The nitrile control material demonstrated inherent antimicrobial efficacy of three and four logs. These results are comparing the reduction in applied organisms (estimated from the latex control material Table 24).

Table 24. Latex Glove Samples Evaluated:

| Sample No. | Antimicrobial Treatment | Log Recovery | Result |
|------------|-------------------------|--------------|--------|
| 1 | PFE control | 7.23 | control |
| 2 | 0.03g/glove PHMB[a] machine sprayed (3 cycles; 600 glove lot w/1.5L spray; pickup-0.02 g/glove) | <1.4 | >5.83 |

Table 25. Nitrile Glove Samples Evaluated:

| Sample No. | Antimicrobial Treatment | Log Recovery | Result † |
|------------|-------------------------|--------------|----------|
| 1 | Nitrile control (RSR nitrile) | 3.08 | control |
| 2 | Hand sprayed PHMB[a] 2% (ballpark estimate of 0.03g/glove); microgirp nitrile | 5.95 | NR |
| | | | |
| 3 | Nitrile control (RSR nitrile) | 4.00 | control |
| 4 | PHMB[a] machine sprayed ~ 0.03 g/glove (160°F; 1 cycle, 30 min, 1.5L total spray, 600 glove batch) | <2.15 | >1.85 |
| †No Reduction = less than 0.5 log reduction of test glove compared to control glove. Inoculum: 8.08 | | | |

Zone of inhibition testing was completed to evaluate adherence of the antimicrobial agent. The results are summarized below in Tables 26 and 27.

Table 26.

| Sample # | description | Inoculum Level | Zone of Inhibition | Test Organism | Sample Size |
|----------|-------------|----------------|--------------------|--------------| ------------|
| 1 | Nitrile substrate | $1.1 \times 10^5$ CFU/ml | none | S. aureus | 100 $\mu$l |
| 2 | Nitrile substrate | $1.1 \times 10^5$ CFU/ml | none | S. aureus | 100 $\mu$l |
| 3 | Nitrile substrate | $1.1 \times 10^5$ CFU/ml | none | S. aureus | 100 $\mu$l |
| 4 | Nitrile substrate | $1.1 \times 10^5$ CFU/ml | none | S. aureus | 100 $\mu$l |

(continued)

| Sample # | description | Inoculum Level | Zone of Inhibition | Test Organism | Sample Size |
|---|---|---|---|---|---|
| 5 | Negative Control - Nitrile substrate | $1.1 \times 10^5$ CFU/ml | none | S. aureus | 100 μl |
| 6 | Positive control - 0.5% Amphyl (v:v) | $1.1 \times 10^5$ CFU/ml | 5 mm | S. aureus | 100 μl |

Table 27.

| Sample # | description | Inoculum Level | Zone of Inhibition | Test Organism | Sample Size |
|---|---|---|---|---|---|
| 1 | Nature Rubber Latex substrate | $1.3 \times 10^5$ CFU/ml | none | S. aureus | 100 μl |
| 2 | Nature Rubber Latex substrate | $1.3 \times 10^5$ CFU/ml | none | S. aureus | 100 μl |
| 3 | Nature Rubber Latex substrate | $1.3 \times 10^5$ CFU/ml | none | S. aureus | 100 μl |
| 4 | Nature Rubber Latex substrate | $1.3 \times 10^5$ CFU/ml | none | S. aureus | 100 μl |
| 5 | Nature Rubber Latex substrate | $1.3 \times 10^5$ CFU/ml | none | S. aureus | 100 μl |
| 6 | Negative Contol - Nature Rubber Latex substrate | $1.3 \times 10^5$ CFU/ml | none | S. aureus | 100 μl |
| 7 | Positive Control - 0.5% Amphyl (v:v) | $1.3 \times 10^5$ CFU/ml | 5 mm | S. aureus | 100 μl |

The present invention has been described in general and in detail by way of examples. The words used are words of description rather than of limitation. Persons of ordinary skill in the art understand that the invention is not limited necessarily to the embodiments specifically disclosed, but that modifications and variations may be made without departing from the scope of the invention as defined by the following claims or their equivalents, including other equivalent components presently known, or to be developed, which may be used within the scope of the present invention. Therefore, unless changes otherwise depart from the scope of the invention, the changes should be construed as being included herein and the appended claims should not be limited to the description of the preferred versions herein.

Table 2. Illustrative Examples of Antimicrobial Compositions

| EXAMPLE Ingredient | 1 | 2 | 3 | 4 | 5 | 6 | 7 | 8 | 9 | 10 | 11 | 12 | 13 |
|---|---|---|---|---|---|---|---|---|---|---|---|---|---|
| PHMB | 25% | 20% | 20% | 50% | 50% | 30% | 95% | 90% | 50 | 95% | 90% | 99% | 80% |
| Crodacel QM | 5% | 10% | | 10% | 5% | 10% | 5% | 10% | 50 | | | | |
| Chitosan CMF | 10% | | 20% | 10% | 20% | 20% | | | | | | | |
| Aegis AEM 5700 | 5% | 10% | | | | | | | | | | | 20% |
| Glucopn 220 UP | 5% | | | | | | | | | 5% | 10% | 1% | |
| Xylitol | 15% | 10% | 20% | 10% | | | | | | | | | |
| Citric Acid | 15% | 30% | 20% | 10% | 25% | 20% | | | | | | | |
| Benzoic acid | | 20% | | | | | | | | | | | |
| PVP | | | | 10% | | 20% | | | | | | | |
| PVP/Iodine | 10% | | | | | | | | | | | | |
| E 481 | | 20% | 20% | | | | | | | | | | |
| Nicepole FC | 10% | | | | | | | | | | | | |

| EXAMPLE Ingredient | 14 | 15 | 16 | 17 | 18 | 19 | 20 | 21 | 22 | 23 | 24 | 25 | 26 |
|---|---|---|---|---|---|---|---|---|---|---|---|---|---|
| PHMB | 50% | 3% | 50% | 13% | 5% | 6% | 29% | 33% | 67% | 43% | 20% | 5% | 20% |
| Crodacel QM | | | | | | | | | | | | | |
| Chitosan CMF | | | | | | | | | | | | | |
| Aegis AEM 5700 | | | 15% | | | | | | | | | | |
| Glucopn 220 UP | 50% | | 5% | 8% | 20% | | | | | | 10% | 20% | 10% |
| Xylitol | | 97% | 5% | 79% | 75% | 94% | | | | | | | |
| Citric Acid | | | 20% | | | | | | | | 70% | 75% | 70% |
| Benzoic acid | | | 5% | | | | | | | | | | |
| PVP | | | | | | | 71% | | | | | | |
| PVP/Iodine | | | | | | | | | | | | | |
| E 481 | | | | | | | | 67% | | 36% | | | |
| Nicepole FE 18U | | | | | | | | | 33% | 21% | | | |

Table 2A. Illustrative Examples of Compositions that include Topical and Internal Melt Addition of Biocide Agents

| EXAMPLE Ingredient | 27 | 28 | 29 | 31 |
|---|---|---|---|---|
| **Topical** | | | | |

(continued)

| EXAMPLE | | | | |
|---|---|---|---|---|
| Ingredient | 27 | 28 | 29 | 31 |
| PHMB | 50% | 20% | 35% | 20% |
| Crodacel QM | 10% | | 5% | |
| Chitosan CMF | 20% | | | |
| Aegis AEM 5700 | | | | |
| Glucopn 220 UP | | | | |
| Xylitol | | | 10% | |
| Citric Acid | | | | |
| Benzoic acid | | | | |
| PVP | | | | |
| PVP/Iodine | | | | |
| E 481 | | | | |
| Nicepole FC | | | | |
| 1-hexanol | | 5% | | 5% |
| **Internal** | | | | |
| Alphasan RC 2000 | | | 50% | 75% |
| Irgaguard B 7520 | | | | |
| Cupron | 20% | 75% | | |

## Nonwoven Gown with Antimicrobial and Barrier properties

Table 3. - Dynamic Shake Flask Log Reduction Results for various PHMB co-formulations against common pathogens.

| Example | Ttreatment Composition | | | ZOI (mm) | | Log Reduction | | | | | | | | | | | |
| | Chemistry (*) | Conc. (wt%) | PH | | | S. aureus | | | | P. aeruginosa | | | | C. albican | | | |
| | | | | AATCC** | ASTM*** | 1 min. | 5 Min. | 15 min. | 30 min. | 1 min. | 5 min. | 15 min. | 30 min. | 1 min. | 5 min. | 15 min. | 30 min. |
| 1 | PHMB | 0.5% | | None | None | 1.2 | 1.6 | 2.9 | 3.0 | 4.0 | - | - | - | 1.4 | 1.7 | 2.7 | 3.0 |
| | Citric Acid | 3.0% | | | | | | | | | | | | | | | |
| | Glucopon 220 UP | 0.3% | | | | | | | | | | | | | | | |
| | | | | | | | | | | | | | | | | | |
| 2 | PHIVVIB | 0.2% | | None | None | 1.31 | 2.38 | 3.02 | 4.00 | 4.0 | - | - | - | 1.75 | 2.52 | 3.0 | 4.0 |
| | Citric Acid | 3.0% | 2.6 | | | | | | | | | | | | | | |
| | Glucopon 220 UP | 0.0% | | | | | | | | | | | | | | | |
| | | | | | | | | | | | | | | | | | |
| 3 | PHMB | 0.2% | | None | None | 2.38 | 4.00 | - | - | 4.0 | - | - | - | 2.4 | 3.0 | 3.0 | 4.0 |
| | Citric Acid | 0.3% | 4.5 | | | | | | | | | | | | | | |
| | Glucopon 220 UP | 0.3% | | | | | | | | | | | | | | | |

* Treatment compositions contained 5 w/v% Bovine Serum Albumine (BSA)
** AATCC # 147-1998 modified to use dried agar instead of wet agar on which the fabric is placed
*** ASTM2149-01 (100 ml)

Table 4.    Dynamic Shake Flask efficacy results and impact of surface treatment on barrier Properties of 1.5 osy SMS fabric.

| Treatment Composition | | Pathogen | Log Reduction at various times | | | | ZOI (mm) | | HH [3] | | Perm [4] |
|---|---|---|---|---|---|---|---|---|---|---|---|
| Chemistry | Wt% | | | | | | AATCC[1] | ASTM[2] | (mbar) | | |
| | | | 1 min. | 5 min. | 15 min. | 30 min. | | | | | |
| Control | 0 | S. aureus | - | 0.00 | NR | 0.00 | None | None | Average | 83.5 | 32.7 |
| | | P. aeruginosa | - | 0.00 | NR | NR | | | Std. Dev. | 8.9 | 0.8 |
| | | C. albicans | - | NR | NR | 0.00 | | | %Cov | 11% | 2% |
| PHMB | 0.2% | S. aureus | 14.31 | 1.00 | 4.00 | - | None | None | Average | 61.7 | |
| | | P. aeruginosa | 1.00 | 4.00 | - | - | | | Std. Dev. | 4.5 | N/A |
| | | C. albicans | 0.00 | 2.37 | 2.95 | 3.00 | | | %Cov | 7% | |
| PHMB | 0.2% | S. aureus | 0.94 | 3.00 | 4.00 | - | None | None | Average | 67 | 34.6 |
| PVP | 0.5% | P. aeruginosa | 1.00 | - | - | - | | | Std. Dev. | 11 | 0.9 |
| | | C. albicans | 1.80 | 2.70 | 4.00 | 4.00 | | | %Cov | 16% | 2% |
| | | | | | | | | | | | |
| PHMB | 0.2% | S. aureus | 2.60 | 4.00 | - | - | 0- 0.5 | None | Average | 65.8 | 32.0 |
| E481 | 0.4% | P. aeruginosa | 4.00 | - | - | - | | | Std. Dev. | 6.7 | 1.0 |
| | | C. albicans | 1.65 | 2.60 | 3.00 | 4.00 | | | %Cov | 10% | 3% |

*Note:*
ZOI is Zone of inhibition
E481 is Bermcoll EBS 481 FQ - Ethyl hydroxyethyl cellulose
PVP is polyvinylpyrrolidone

(1) Method AATCC #147-1998 modified
(2) Method ASTM E2149-01
(3) HydroStatic Head - (100cm^ Head) mbar; STM 4507
(4) Air Permeability STM 3801 (38cm^2 Head) cfm

**Comment:**

E 481 and PVP are water-soluble polymers and which are poorly surface active. But E 481 and PVP are are also good film
and good viscosity increasing agents. A combination of film forming, low surface tension reduction and high composition
viscosity allow to limit flow of the treatment composition into the bulk of the SMS structure and makes the treatment
less likely to affect barrier property of SMS as measured by hydrostatic head pressure.

Table 5. Barrier and Anti-Static Properties Results for 0.6 wt % PHMB and co-fomulations applied onto osy SMS via various prcesses

| Examples | Material | Coating Process | Treatment Chemistry and add-on (wt%) | | | STATIC Decay at 50% pos/ neg (sec) | Hydrostatic Head (mbar) | % Diff from untreated Control | % Diff from saturation Control |
|---|---|---|---|---|---|---|---|---|---|
| | | | PHMB (wt %) | Nicepole FE 18U (wt %) | Bermocoll E481 FQ (wt %) | | | | |
| A | SMS Control | None | 0 | 0 | 0 | No charge | 55.0 | 0% | 107% |
| B | SMS | Saturation | 0.6 | 0.3 | 0 | No charge | 26.5 | -52% | 0% |
| C | SMS | Offset (Flexo) Gravure | 0.6 | 0.3 | 0.5 | <0.5 | 42.5 | -23% | 67% |
| D | SMS | Reverse Gravure | 0.6 | 0.3 | 0 | <0.5 | 46.9 | -15% | 85% |
| E | SMS | Meyer rod | 0.6 | 0.3 | 0 | No charge | 34.2 | -38% | 35% |

Static Decay Method:

Table 6. Efficacy of Spunbond treated with antimicrobial against various organisms. Values average log reduction of ≥2 replicates. All materials contacted with microbes for 10 min at 25 C. Zone of inhibition measured with *Staphylococcus aureus* ATCC 27660.

| Treatment | Microbe | | | | Zone of inhibition |
|---|---|---|---|---|---|
| | *Staphylococcus aureus* ATCC 27660 | *Staphylococcus aureus* MRSA ATCC 33591 | *Klebsiella pneumoniae* ATCC 4352 | *Candida albicans* ATCC 10231 | |
| 2.0% PHMB | >3.5 | | >4.2 | >2.5 | Negative |
| 1.0% PHMB | >3.5 | >4.5 | | | Negative |
| 0.40% PHMB | >3.5 | 3.5 | | | Negative |
| 0.20% PHMB | >3.5 | 3.5 | >4.2 | >2.5 | Negative |
| 0.10% PHMB | >3.5 | 4.5 | >4.2 | >2.5 | Negative |
| 0.50% PHMB + 0.30% Crodacel | >3.5 | 3.5 | >4.2 | >2.5 | Negative |
| 0.50% PHMB + 0.30% AEGIS | >3.5 | | | | Negative |
| 0.50% PHMB + 0.50% AEGIS + 0.30% Crodacel QM | >3.5 | | | | Negative |

Table 7. Efficacy of Spunbond treated with antimicrobial against various organisms. Values average log reduction of ≥2 replicates. All materials contacted with microbes for 30 min at 25 C in the presence of 5% bovine serum albumin.

| Treatment | *Staphylococcus aureus* ATCC 27660 | *Staphylococcus aureus* MRSA ATCC 33591 | *Klebsiella pneumoniae* ATCC 4352 | *Candida albicans* ATCC 10231 | *Moraxella catarrhalis Enterococcus faecalis* ATCC 8176 | *Enterococcus faecalis* VRE ATCC 51299 |
|---|---|---|---|---|---|---|
| 0.20% PHMB | | >4.5 | 5 | | 4.4* | 3.1* |
| 0.10% PHMB | 2.9 | | 2.5 | 1.1 | | |
| 0.50% PHMB + 0.30% Crodacel | | | | | | |
| 0.50% PHMB + 0.30% AEGIS | 0.4 | | | | | |
| 0.20% PHMB | 6.8 | 7.2 | 7.2 | 5.6 | 7.5 | 7.3 |

Table 8. Efficacy of Spunbond treated with antimicrobial against viruses. Values average log reduction of 3 replicates. All materials contacted with microbes for 30 min at 25 C in the presence of 5% bovine serum albumin.

| Treatment | Virus | |
|---|---|---|
| | Rhinovirus 1A ATCC VR-1364 | Influenza A VR-1469 |
| 0.20% PHMB + 0.30% Crodacel | 0.7 | 0.9 |
| 0.20% PHMB + 0.30% Glucopon | 0.7 | 0.8 |
| 0.5% PHMB + 2.0% Glucopon + 7.5% Citric acid | 3 | 3 |
| 0.5% PHMB | 1.6 | 2.3 |
| 0.6% Benzoic Acid | 1.3 | 1.7 |
| 0.2% PHMB + 0.6% Benzoic Acid + 0.3% Glucopon | 1.4 | 3.0 |
| 0.5% PHMB + 0.6% Benzoic acid + 0.3% Glucopon | 1.7 | 2.9 |

Table 9. Efficacy of SMS treated with antimicrobial against various organisms. Values average log reduction of ≥2 replicates. All materials contacted with microbes for 10 min at 25 C.

| Treatment | *Staphylococcus aureus* ATCC 27660 | *Staphylococcus aureus* MRSA ATCC 33591 |
|---|---|---|
| 1.0% PHMB | 3.1 | 4.5 |
| 0.30% PHMB | 2.8 | |
| 0.20% PHMB | 2.2 | 3.6 |
| 0.10% PHMB | 3.0 | 0.5 |
| 0.20% PHMB + 0.10% Crodacel | 3.3 | 2.5 |
| 0.40% PHMB + 0.30% Crodacel | 3.8 | 2.5 |
| 0.20% PHMB + 0.10% Glucopon | 3.8 | 2.7 |
| 0.40% PHMB + 0.30% Glucopon | 3.3 | 3.0 |

Table 10. Efficacy of SMS Treated with antimicrobial against various organisms. Values average log reduction of ≥2 replicates. All materials contacted with microbes for 30 min at 25 C in the presence of 5% bovine serum albumin.

| Treatment | *Staphylococcus aureus* ATCC 27660 | *Staphylococcus aurous* MRSA ATCC 33591 | *Enterococcus faecalis* VRE ATCC 51299 | *Klebsiella pneumoniae* ATCC 4352 | *Moraxella catarrhalis* ATCC 8176 | *Candida albicans* ATCC 10231 |
|---|---|---|---|---|---|---|
| 0.10% PHMB | | | | 0.5 | | 0.7 |
| 0.20% PHMB + 0.20% Nicepole | 1.8 | 1.3 | | | | |

(continued)

| Treatment | *Staphylococcus aureus* ATCC 27660 | *Staphylococcus aurous* MRSA ATCC 33591 | *Enterococcus faecalis* VRE ATCC 51299 | *Klebsiella pneumoniae* ATCC 4352 | *Moraxella catarrhalis* ATCC 8176 | *Candida albicans* ATCC 10231 |
|---|---|---|---|---|---|---|
| 0.40% PHMB + 0.80% Nicepole (1.0 osy) | | 2.3 | | | | |
| 0.40% PHMB + 0.80% Nicepole (1.25 osy) | | 2.1 | | | | |
| 0.40% PHMB + | | 1.9 | | | | |
| 0.40% PHMB + 0.50% Nicepole (1.0 osy) | | 1.9 | | | | |
| 0.40% PHMB + 0.80% Nicepole (1.25 osy) | | 3 | | | | |
| 0.40% PHMB (1.0 osy) | | 3.3 | | | | |
| 0.40% PHMB (1.0 osy) | | 2.6 | | | | |
| 0.60% PHMB (1.0 osy) | | 2.3 | | | | |
| 0.80% PHMB (1.0 osy) | | 3.4 | | | | |
| 1.0% PHMB (1.0 osy) | | >4.4 | | | | |
| 0.40% PHMB + 0.40% Nicepole | | 3 | | | | |
| 0.40% PHMB + 0.30% Nicepole | | 2.5 | | | | |

(continued)

| Treatment | *Staphylococcus aureus* ATCC 27660 | *Staphylococcus aurous* MRSA ATCC 33591 | *Enterococcus faecalis* VRE ATCC 51299 | *Klebsiella pneumoniae* ATCC 4352 | *Moraxella catarrhalis* ATCC 8176 | *Candida albicans* ATCC 10231 |
|---|---|---|---|---|---|---|
| 0.60% PHMB + 0.30% Nicepole | | 2.7 | | | | |
| 0.80% PHMB + 0.30% Nicepole | | 2.7 | | | | |
| 1.0% PHMB + 0.30% Nicepole | | >4.4 | 5.4 | >5.8 | >6.7 | |

Table 11A+B. Ability of treated Spunbond and SMS to reduce the transfer of microbes from the treated material to porcine skin. All materials contacted with microbes for 30 min at 25 C in the presence of 5% bovine serum albumin. After contact the materials touched porcine skin for 1 min. The numbers of bacteria transferred to porcine skin were enumerated and log reductions calculated. All values are averages of nine replicates.

| Treatment | *Staphylococcus aureus* MRSA | *Enterococcus faecalis* VRE *Enterococcus faecalis* VRE | *Klebsiella pneumoniae* ATCC 4352 | *Moraxelia catardalis* ATCC 8176 |
|---|---|---|---|---|
| Spunbound + 0.20% PHMB | 5.1 | 4.4 | 5.6 | >5.9 |
| SMS + 1.0% PHMB + 0.3% Nicepole | 5.7 | 5.3 | 5.3 | 5.6 |

## Claims

1. An antimicrobial composition comprising a mixture of a first antimicrobial agent which is polyhexamethylene biguanide (PHMB), at least one second agent selected from PG-hydroxyethylcellulose cocodimonium chloride, octadecylaminodimethyl trimethoxysilylpropyl ammonium chloride, xylitol and an alkyl polyglycoside, and optionally an anti-static agent or a fluoropolymer,

2. The antimicrobial solution according to claim 1, wherein said first and second agents are present in a ratio ranging from about 1000:1 to about 1:1000, respectively.

3. An antimicrobial composition comprising a mixture, in terms of weight percent of active agents either in solution or on a substrate, of about 0.1 - 99.9 wt.% of polyhexamethylene biguanide (PHMB), and about 0.1 - 99.9 wt.% concentration of a second agent selected from PG-hydroxyethylcellulose cocodimonium chloride, octadecylaminodimethyl trimethoxysilylpropyl ammonium chloride, xylitol and an alkyl polyglycoside

4. The antimicrobial composition according to claim 3, wherein said composition is stably associated with a treated substrate surface.

5. The antimicrobial composition according to claim 3, wherein said composition is odorless to the human olfactory system.

6. The antimicrobial composition according to claim 3, wherein said composition exhibits at least a 3 $\log_{10}$ reduction of microbes within a period of about 30 minutes.

**7.** The antimicrobial composition according to claim 3, wherein said composition exhibits a killing efficacy of at least a 3 $\log_{10}$ CFU within a period of about 15 minutes.

**8.** The antimicrobial composition according to claim 3, wherein said composition exhibits at least a 1 $\log_{10}$ reduction CFU within a period of about 5-10 minutes.

**9.** The antimicrobial composition according to claim 3, wherein said PHMB is present on a treated substrate In a final concentration in a range of about 0.01-5 wt.%.

**10.** The antimicrobial composition according to claim 3, wherein said composition includes an anti-viral agent.

**11.** An antimicrobial solution comprising a primary active agent, including at least 0.1-99.9 wt% polyhexamethylene biguanide (PHMB) by weight of active agents, and a secondary active agent selected from at least one of the following: PG-hydroxyethylcellulose cocodimonium chloride, octadecylaminodimethyl trimethoxysilylpropyl ammonium chloride, xylitol and an alkyl polyglycoside.

**12.** The antimicrobial solution according to claim 11, wherein said final concentration for each of the active agents on a treated substrate can range from about 0.01-20 wt%.

**13.** The antimicrobial solution according to claim 11, wherein said solution has a pH value in a range of about 2 to about 6.

**Patentansprüche**

**1.** Antimikrobielle Zusammensetzung, umfassend ein Gemisch aus einem ersten antimikrobiellen Agens, welches Polyhexamethylenbiguanid (PHMB) ist, mindestens einem zweiten Agens, ausgewählt aus PG-Hydroxyethylcellulosecocodimoniumchlorid, Octadecylaminodimethyltrimethoxysilylpropylammoniumchlorid, Xylitol und einem Alkylpolyglycosid, sowie gegebenenfalls einem antistatischen Agens oder einem Fluorpolymer.

**2.** Antimikrobielle Lösung nach Anspruch 1, wobei das erste und zweite Agens in einem Verhältnis vorhanden sind, das entsprechend von etwa 1000:1 1 bis etwa 1:1000 reicht.

**3.** Antimikrobielle Zusammensetzung, enthaltend ein Gemisch, bezogen auf Gewichtsprozent der aktiven Agentien entweder in Lösung oder auf einem Substrat, von etwa 0,1 - 99,9 Gew.-% Polyhexamethylenbiguanid (PHMB) und etwa 0,1 - 99,9 Gew.-% Konzentration eines zweiten Agens, ausgewählt aus PG-Hydroxyethylcellulosecocodimoniumchlorid, Octadecylaminodimethyltrimethoxysilylpropylammoniumchlorid, Xylitol und einem Alkylpolyglycosid.

**4.** Antimikrobielle Zusammensetzung nach Anspruch 3, wobei die Zusammensetzung fest mit einer behandelten Substratoberfläche verbunden ist.

**5.** Antimikrobielle Zusammensetzung nach Anspruch 3, wobei die Zusammensetzung für das menschliche olfaktorische System geruchlos ist.

**6.** Antimikrobielle Zusammensetzung nach Anspruch 3, wobei die Zusammensetzung eine Reduzierung der Mikroben um mindestens 3 $\log_{10}$ innerhalb eines Zeitraumes von etwa 30 Minuten zeigt.

**7.** Antimikrobielle Zusammensetzung nach Anspruch 3, wobei die Zusammensetzung eine abtötende Wirkung von mindestens 3 $\log_{10}$ CFU innerhalb eines Zeitraumes von etwa 15 Minuten zeigt.

**8.** Antimikrobielle Zusammensetzung nach Anspruch 3, wobei die Zusammensetzung eine Reduzierung von mindestens 1 $\log_{10}$ CFU innerhalb eines Zeitraumes von etwa 5 - 10 Minuten zeigt.

**9.** Antimikrobielle Zusammensetzung nach Anspruch 3, wobei das PHMB auf einem behandelten Substrat in einer Endkonzentration in einem Bereich von etwa 0,01 - 5 Gew.-% vorhanden ist.

**10.** Antimikrobielle Zusammensetzung nach Anspruch 3, wobei die Zusammensetzung ein antivirales Agens enthält.

**11.** Antimikrobielle Lösung, enthaltend ein primäres aktives Agens, das mindestens 0,1 - 99,9 Gew.-% Polyhexamethylenbiguanid (PHMB) an Gewicht aktiver Agentien enthält, und ein sekundäres aktives Agens, ausgewählt aus mindestens einem der folgenden: PG-Hydroxyethylcellulosecocodimoniumchlorid, Octadecylaminodimethyltrimethoxysilylpropylammoniumchlorid, Xylitol und einem Alkylpolyglycosid.

12. Antimikrobielle Lösung nach Anspruch 11, wobei die Endkonzentration für jedes der aktiven Agentien auf einer behandelten Oberfläche von etwa 0,01 - 20 Gew.-% reichen kann.

13. Antimikrobielle Lösung nach Anspruch 11, wobei die Lösung einen pH-Wert in einem Bereich von etwa 2 bis etwa 6 aufweist.

**Revendications**

1. Composition antimicrobienne comprenant un mélange d'un premier agent antimicrobien qui est le polyhexaméthylène biguanide (PHMB), au moins un second agent sélectionné parmi le chlorure de PG-hydroxyéthylcellulose cocodimonium, le chlorure d'octadécylaminodiméthyl triméthoxysilylpropyl ammonium, le xylitol et un alkyl polyglycoside, et facultativement un agent anti-statique ou un polymère fluoré.

2. Solution antimicrobienne selon la revendication 1, dans laquelle lesdits premier et second agents sont présents selon un rapport compris, respectivement, entre environ 1000:1 et environ 1:1000.

3. Composition antimicrobienne comprenant un mélange, en termes de pourcentages pondéraux d'agents actifs soit en solution soit sur un substrat, d'environ 0,1-99,9 % en poids de polyhexaméthylène biguanide (PHMB), et d'environ 0,1-99,9 % en poids d'un second agent sélectionné parmi le chlorure de PG-hydroxyéthylcellulose cocodimonium, le chlorure d'octadécylaminodiméthyl triméthoxysilylpropyl ammonium, le xylitol et un alkyl polyglycoside.

4. Composition antimicrobienne selon la revendication 3, ladite composition étant associée, de manière stable, à une surface de substrat traité.

5. Composition antimicrobienne selon la revendication 3, ladite composition étant inodore au système olfactif humain.

6. Composition antimicrobienne selon la revendication 3, ladite composition provoquant une réduction d'au moins 3 $\log_{10}$ des microbes en une période d'environ 30 minutes.

7. Composition antimicrobienne selon la revendication 3, ladite composition manifestant une efficacité de destruction des UFC d'au moins 3 $\log_{10}$ en une période d'environ 15 minutes.

8. Composition antimicrobienne selon la revendication 3, ladite composition manifestant une réduction des UFC d'au moins 1 $\log_{10}$ en une période d'environ 5-10 minutes.

9. Composition antimicrobienne selon la revendication 3, dans laquelle ledit PHMB est présent sur un substrat traité à une concentration finale comprise dans une gamme d'environ 0,01-5 % en poids.

10. Composition antimicrobienne selon la revendication 3, ladite composition incluant un agent anti-viral.

11. Solution antimicrobienne comprenant un agent actif primaire, incluant au moins 0,1-99,9 % en poids de polyhexaméthylène biguanide (PHMB) par rapport au poids des agents actifs, et un agent actif secondaire sélectionné parmi l'un au moins des suivants : le chlorure de PG-hydroxyéthylcellulose cocodimonium, le chlorure d'octadécylaminodiméthyl triméthoxysilylpropyl ammonium, le xylitol et un alkyl polyglycoside.

12. Solution antimicrobienne selon la revendication 11, dans laquelle ladite concentration finale en chacun des agents actifs sur un substrat traité peut être comprise dans la gamme d'environ 0,01-20 % en poids.

13. Solution antimicrobienne selon la revendication 11, ladite solution ayant une valeur de pH comprise dans la gamme allant d'environ 2 à environ 6.

FIG.1

EP 1 919 996 B1

**FIG. 2**

EP 1 919 996 B1

FIG. 3A

FIG. 3B

FIG. 3C

FIG. 4A

FIG. 4B

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040151919 A

- US 6562777 B

**Non-patent literature cited in the description**

- American Society for Testing and Materials. Standard Practices for Evaluating Inactivators of Antimicrobial Agents Used in Disinfectant, Sanitizer,Antiseptic, or Preserved Products. Amer. Soc. Testing Mat. E, 1991, 1054-91